# EUROPÄISCHE PATENTSCHRIFT

(11) **EP 3 158 629 B1**
(45) Veröffentlichungstag und Bekanntmachung des Hinweises auf die Patenterteilung: **27.04.2022**
(21) Anmeldenummer: 15730732.3
(22) Anmeldetag: 15.06.2015
(51) Int. Cl.: H02K 33/16, F16F 13/26

(54) **LINEARAKTOR, HYDROLAGER SOWIE KRAFTFAHRZEUG MIT EINEM DERARTIGEN HYDROLAGER BZW. LINEARAKTOR**
LINEAR ACTUATOR, HYDRAULIC BEARING, AND MOTOR VEHICLE WITH SUCH A HYDRAULIC BEARING OR LINEAR ACTUATOR
ACTIONNEUR LINÉAIRE, PALIER HYDRAULIQUE ET VÉHICULE AUTOMOBILE ÉQUIPÉ D'UN TEL PALIER HYDRAULIQUE OU ACTIONNEUR LINÉAIRE

(30) Priorität: 23.06.2014 DE 102014211949
(43) Veröffentlichungstag der Anmeldung: 26.04.2017
(73) Patentinhaber: ContiTech Vibration Control GmbH, 30165 Hannover (DE)
(72) Erfinder: GENDERJAHN, Robert, 30625 Hannover (DE); WERHAHN, Max, 30449 Hannover (DE); MARIENFELD, Peter, 31608 Marklohe (DE)
(74) Vertreter: Continental Corporation
(86) Internationale Anmeldenummer: PCT/EP2015/063261
(87) Internationale Veröffentlichungsnummer: WO 2015/197390

(56) Entgegenhaltungen:
- EP-A1- 1 193 844
- EP-A1- 1 329 203
- EP-A1- 1 376 833
- WO-A1-03/071156
- DE-A1-102012 102 833
- None

## Beschreibung

Die Erfindung betrifft ein Linearaktor mit einem Stator und einem zu dem Stator beweglichen Anker.

Außerdem betrifft die Erfindung ein Hydrolager mit einer Tragfeder, einer Arbeitskammer, die mit einer Hydraulikflüssigkeit gefüllt ist, einer Ausgleichskammer, einer Trennwand, die zwischen der Arbeitskammer und der Ausgleichskammer angeordnet ist, einem zwischen der Arbeitskammer und der Ausgleichskammer ausgebildeten Drosselkanal zum Austausch von Hydraulikflüssigkeit, einer der Trennwand zugeordneten Steuermembran, die zur Veränderung eines Arbeitskammervolumens der Arbeitskammer ausgebildet ist, und dem elektromagnetischen Linearaktor, wobei der Anker des Linearaktors mit der Steuermembran mechanisch verbunden ist.

Darüber hinaus betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Linearaktoren mit einem Stator und einem dazu beweglich gelagerten Anker sind aus dem Stand der Technik bekannt. In diesem Zusammenhang ist auf die relative Bewegung zwischen dem Stator und dem Anker abzustellen. Wenn von einem zu dem Stator beweglichen Anker gesprochen wird, soll damit vorzugsweise auch ein zu dem Anker beweglicher Stator gemeint sein. Ebenfalls sind Hydrolager, die auch als Hydrauliklager bezeichnet werden, aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis eines Kraftfahrzeugs befindenden Hydrolagern soll einerseits verhindert werden, dass sich Motor-Vibrationen auf das Chassis übertragen und andererseits sollen die mit dem Fahrbetrieb gegebenen Erschütterungen des Chassis nicht oder nur gedämpft vom Chassis an den Motor gelangen können. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen muss, um entstehende Schwingungen über einen möglichst breiten Frequenzbereich möglichst zu isolieren.

In ihrer Grundversion weisen derartige Hydrauliklager üblicherweise ein Gummielement als Tragfeder in Verbindung mit einem hydraulischen Dämpfer auf. Das Gummielement ist oft als Hohl-Konus ausgebildet. Die Tragfeder kann somit eine Mantelwandung der Arbeitskammer bilden. Die Tragfeder wird deshalb auch als Tragkörper verstanden. An der oberen, spitzen Stirnseite des Hohl-Konuses ist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann.

Dabei umfasst der hydraulische Dämpfer zumeist mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeiterkammer und die Ausgleichskammer voneinander zu trennen, ist zwischen der Ausgleichskammer und der Arbeitskammer eine Trennwand angeordnet. Außerdem ist ein zwischen der Arbeitskammer und der Ausgleichkammer ausgebildeter Drosselkanal zum Austausch von Hydraulikflüssigkeit vorgesehen. Vorzugsweise ist der Drosselkanal zumindest abschnittsweise von der Trennwand ausgebildet. Alternativ kann der Drosselkanal auch von der Trennwand getrennt ausgebildet sein. Die Hydraulikflüssigkeit in der Arbeitskammer, der Ausgleichskammer und dem Drosselkanal bildet vorzugsweise das gesamte Hydraulikvolumen des Hydrolagers, sofern in Sonderausführungen nicht weitere Zusatzvolumina vorgesehen sind. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Wird durch das Einfedern der Tragfeder die Arbeitskammer verkleinert, steigt der Druck in der Arbeitskammer an, so dass ein Teil der Hydraulikflüssigkeit der Arbeitskammer durch den Drosselkanal in die Ausgleichskammer strömt. Der Drosselkanal ist vorzugsweise derart ausgebildet, dass dieser für die strömende Hydraulikflüssigkeit einen Strömungswiderstand darstellt. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil versehen, so dass der in die Ausgleichskammer einströmende Teil der Hydraulikflüssigkeit aufgenommen werden kann.

Ein derartiges Hydrolager ist beispielsweise aus dem Dokument DE 10 2010 060 886 A1 oder aus dem Dokument DE 10 2012 008 497 A1 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Tragfeder aufgenommen, die eine relativ große Steifheit aufweist.

Niederfrequente Schwingungen, d.h. Schwingungen mit Frequenzen von ca. 5 bis 20 Hz, die im allgemeinen mit großen Amplituden auftreten, werden durch das Zusammenwirken der beiden Hydraulikkammern über den Drosselkanal stark gedämpft. Die Dämpfung entsteht dabei mit dem Strömen von zumindest eines Teils der Hydraulikflüssigkeit der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich oberhalb des von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher Schwingungen kann die Trennwand zwischen Arbeitskammer und Ausgleichskammer teilweise flexibel oder mit einem Freiweg ausgebildet werden. Eine solche Lösung wird jedoch vielen Dämpfungsanforderungen, insbesondere hinsichtlich der stetig steigenden Komfortanforderungen bei Kraftfahrzeugen, nicht mehr als ausreichend angesehen.

Im Hinblick auf das verbesserte Isolieren solcher Schwingungen werden heute sogenannte aktiv gesteuerte Hydrolager eingesetzt, die jeweils einen Linearaktor, der auch als Linearaktuator bezeichnet wird, aufweisen. Als besonders zweckmäßig haben sich elektromagnetische Linearaktoren herausgestellt, die jeweils einen Stator und einen Anker umfassen. Der Anker ist dabei beweglich gelagert zu dem Stator ausgebildet, so dass der Anker gegenüber dem Stator in Längsrichtung des Linearaktors ausgelenkt werden kann. Für das Hydrolager ist der Anker mechanisch mit einer Steuermembran verbunden, die der Trennwand zugeordnet ist. Die Steuermembran kann dabei durch einen flexiblen Teil der Trennwand gebildet sein. Es ist aber auch möglich, dass die Steuermembran von der Trennwand eingefasst ist und somit als Bestandteil der Trennwand angesehen wird. Die Steuermembran kann in ihrer Normalenrichtung elastisch verformt werden. Indem der Anker mechanisch an die Steuermembran gekoppelt ist, kann mit dem elektromagnetischen Linearaktor die Steuermembran in ihrer Normalenrichtung gesteuert verformt werden. Dabei kann es vorgesehen sein, dass der Anker nicht unmittelbar mit der Steuermembran verbunden ist, sondern dass beispielsweise ein Gelenksmechanismus und/oder ein Stößel vorgesehen sind, die zwischen dem Anker und der Steuermembran angeordnet sind, um Bewegungen und/oder Kräfte vom Anker auf die Steuermembran zu übertragen. Mit dem Verformen der Steuermembran in ihrer Normalenrichtung verändert sich das Hydraulikvolumen der Arbeitskammer, denn die Steuermembran bildet einen Teil der Trennwand zu der Arbeitskammer. Deshalb dient der elektromagnetische Linearaktor des Hydrolagers auch zur Steuerung des Hydraulikvolumens der Arbeitskammer.

Wird das Hydrolager zur Lagerung eines Motors eines Kraftfahrzeuges verwendet, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran der Trennwand von dem Linearaktor synchron ausgelenkt werden. Die Richtung der Auslenkung kann dabei durch die Bauart der Trennwand bzw. der Steuermembran bestimmt sein. Die Schwingungen des Motors verursachen entsprechend hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Geräuschemissionen.

Durch die erläuterte Ansteuerung des elektromagnetischen Linearaktors und des entsprechenden Einwirkens auf die Steuermembran soll also eine Absenkung der dynamischen Federrate im Bereich der hochfrequenten Schwingungen bewirkt werden. Mit anderen Worten soll das Hydrolager für hochfrequente Schwingungen "weich" geschaltet werden.

Zur Kompensation von Trägheitskräften sind auch Aufbauten bekannt, wobei die Steuermembran durch einen Kolben in einem Zylinder gebildet ist und der Kolben rückseitig von der Hydraulikflüssigkeit und vorderseitig von einem komprimierten Luftvolumen beaufschlagt ist. Ein solches Hydrolager offenbart beispielsweise die EP 0 561 703 A1, wobei die hier vorgeschlagene Lösung durch eine aufwendige und komplizierte Bauweise auffällt.

Bei bekannten Hydrolagern zeigt sich ein Nachteil darin, dass in Abhängigkeit einer Masse des Linearaktors eine ungewünschte Resonanz bei Schwingungen in einem bestimmten Frequenzbereich auftritt. Ähnliche Effekte können auch in anderen Anwendungsfällen des Linearaktors auftreten. So beispielsweise bei der Verwendung des Linearaktors für ein aktives Fahrwerklager eines Kraftfahrzeugs oder die aktive Verstellung eines Lagers im Allgemeinen. Außerdem kann der Linearaktor als Schwingungstilger verwendet werden. Weitere Anwendungsgebiete des Linearaktors sind denkbar.

Bei einer Verwendung von einem Anker des Linearaktors mit "hoher" Masse kann die genannte Resonanz im Arbeitsbereich der Hydrolager, des Fahrwerkslagers oder einer anderen Vorrichtung mit einem derartigen Linearaktor sein. Die im Betrieb sodann entstehende Resonanzüberhöhung führt zu einem unerwünschten Anstieg der dynamischen Federrate des Hydrolagers, des Fahrwerklagers beziehungsweise der Vorrichtung. Oftmals kann ab dieser Frequenz kaum noch eine Kompensationswirkung oder Steuerbarkeit erzielt werden. Die dynamische Steifigkeit für den entsprechenden Frequenzbereich um die zuvor genannte Resonanz steigt deshalb deutlich an. In der Folge können bei dem Hydrolager beispielsweise die vom Motor ausgehenden Schwingungen zumindest im Wesentlichen ungedämpft an das Chassis des Kraftfahrzeugs übertragen werden, so dass beispielsweise ein entsprechendes Geräusch im Fahrzeuginnenraum deutlich wahrnehmbar ist.

Die EP 1 329 203 A1 betrifft eine elektrische Zahnbürste mit einem linearen Oszillator. Der lineare Oszillator weist eine Spule auf, welche sich ringförmig um einen spiralfedergelagerten Schaft mit einem Anker erstreckt und zu dem Anker einen radialen Luftspalt ausbildet. Beidseitig der Spule ist jeweils ein Permanentmagnet zwischen jeweils zwei Jochen angeordnet. Die beiden Permanentmagnete sind in der Längsrichtung magnetisiert, welche der Bewegungsrichtung des Schafts mit dem Anker entspricht.

Die EP 1 376 833 A1 und die EP 1 193 844 A1 betreffen vergleichbare lineare Oszillatoren.

Der Erfindung liegt deshalb die Aufgabe zu Grunde, einen Linearaktor beziehungsweise ein Hydrolager bereitzustellen, das bei dynamischer Belastung eine höhere Resonanzfrequenz aufweist. Insbesondere soll die Resonanzfrequenz größer als 50 Hz, 100 Hz, 150 Hz oder 200 Hz sein.

Gemäß einem ersten Aspekt wird die Aufgabe durch den erfindungsgemäßen elektromagnetischen Linearaktor laut Anspruch 1 gelöst.

Gemäß einem weiteren Aspekt wird die Aufgabe durch das erfindungsgemäße Hydrolager gelöst, umfassend eine Tragfeder, eine Arbeitskammer, die mit einer Hydraulikflüssigkeit gefüllt ist, eine Ausgleichskammer, eine Trennwand, die zwischen der Arbeitskammer und der Ausgleichskammer angeordnet ist, einen zwischen der Arbeitskammer und der Ausgleichskammer ausgebildeten Drosselkanal zum Austausch von Hydraulikflüssigkeit, eine der Trennwand zugeordneten Steuermembran, die zur Veränderung eines Arbeitskammervolumens der Arbeitskammer ausgebildet ist, und dem erfindungsgemäßen elektromagnetischen Linearaktor, wobei der Anker mit der Steuermembran mechanisch verbunden ist.

Wenn im Weiteren Merkmale, Details und Vorteile des elektromagnetischen Linearaktors im Zusammenhang mit dem erfindungsgemäßen Hydrolager beschrieben sind, sollen diese selbstverständlich auch unabhängig von dem Hydrolager gelten und jeweils umgekehrt, so dass bezüglich der Offenbarung zu den einzelnen Erfindungsaspekten stets wechselseitig Bezug genommen wird beziehungsweise werden kann.

Bezüglich einer grundlegenden Wirkungsweise eines elektromagnetischen Linearaktors wird auf die Druckschrift DE 198 39 464 C2 verwiesen. Bei dem elektromagnetischen Linearaktor handelt es sich deshalb um ein Reluktanz-Linearaktor.

Erfindungsgemäß weist der Stator ein Leitelement aus ferromagnetischem Material auf. Dieses Leitelement dient deshalb zum Bündeln, Leiten und/oder Lenken eines Magnetfeldes. Unter der Spule ist eine elektromagnetische Spule mit mindestens einer, vorzugsweise mehreren Windungen zu verstehen. Um die jeweiligen Enden des Leitelements für ein Magnetfeld zu schließen, ist der Anker aus ferromagnetischen Material und in Längsrichtung als Joch für das Leitelement ausgebildet. Unter der Längsrichtung ist hier ebenfalls die Längsrichtung des Linearaktors zu verstehen. Um die Beweglichkeit des Ankers gegenüber dem Stator zu gewährleisten, ist zwischen dem Stator und dem Anker bevorzugt ein Luftspalt vorgesehen. Sofern der Stator ringförmig ausgebildet der Anker in den zylindrischen Hohlraum des ringförmigen Stators eingebracht ist, kann der Luftspalt ebenfalls ringförmig ausgebildet sein. Indem sich der Anker als Joch in Längsrichtung ausbildet, bleibt der Luftspalt auch bei einer Bewegung des Ankers in Längsrichtung konstant. Der Anker kann also einen zumindest im Wesentlichen konstanten Abstand zu dem Stator erhalten. Somit weist der Linearaktor ein besonders lineares Übertragungsverhalten auf, was eine einfache Steuerbarkeit gewährleistet.

Um einen Abstand zwischen dem Anker und dem Stator aufrechtzuerhalten, wird vorzugsweise eine Lagerung zwischen dem Anker und dem Stator vorgesehen, die eine Bewegung des Ankers in Längsrichtung erlaubt. Weitere Freiheitsgrade können für die Lagerung vorgesehen sein. Jedoch verhindert die Lagerung eine Bewegung in einer Querrichtung, die sich quer zur Längsrichtung erstreckt. Aus dem Stand der Technik sind hierzu sich in Querrichtung erstreckende Federn zwischen dem Stator und dem Anker bekannt.

Ohne die mindestens eine Spule zu bestromen, ruft nur der mindestens eine Permanentmagnet ein Permanentmagnetfeld hervor, das auf das Leitelement und das vom Anker gebildete Joch wirkt. Es bilden sich entsprechend statische Magnetfeldlinien aus. Das Permanentmagnetfeld des mindestens einen Permanentmagneten ist vorzugsweise in Querrichtung, also in einer Richtung quer zur Längsrichtung, ausgerichtet. Sofern die Spulen nicht bestromt werden, entsteht auch ein statischer, magnetischer Zustand des Linearaktors, wobei der Anker eine bestimmte Ruheposition annimmt.

Bei einer Bestromung der mindestens einen Spule des Stators wird der Anker in Längsrichtung in den Hohlraum des Stators gezogen. Die Zugbewegung des Ankers ist auf eine konstruktive Überlagerung des von der mindestens einen Spule verursachten Spulenmagnetfelds und des Permanentmagnetfelds in einem oberen Abschnitt des Leitelements und einer destruktiven Überlagerung des Spulenmagnetfelds und des Permanentmagnetfelds in einem unteren Abschnitt des Leitelements zurückzuführen. Die konstruktive und destruktive Überlagerung kann auch in umgekehrter Weise erfolgen, wenn der Strom beispielsweise in umgekehrter Richtung fließt. In diesem Fall käme es nicht zu einer Zugbewegung sondern zu einer entgegengesetzten Bewegungsrichtung des Ankers.

Die Kraftwirkung ist also darauf zurückzuführen, dass der Anker in Längsrichtung ein Joch aus ferromagnetischen Material für das Leitelement ausbildet und das Spulenmagnetfeld von dem Permanentmagnetfeld an dem oberen Abschnitt des Leitelements geschwächt und an dem unteren Abschnitt des Leitelements gestärkt wird, oder umgekehrt. Ein entsprechender Effekt kann auch mit mehreren Permanentmagneten erreicht werden. Ist beispielsweise ein erster und ein zweiter Permanentmagnet vorgesehen, wobei die beiden Permanentmagneten in Längsrichtung voneinander beabstandet sind und die mindestens eine Spule in Längsrichtung zwischen den beiden Permanentmagneten, insbesondere mit einer Überlagerung in Längsrichtung, angeordnet ist, können die beiden Permanentmagneten jeweils wesentlich für die konstruktive beziehungsweise destruktive Überlagerung der Magnetfelder verantwortlich sein.

Ein wesentlicher Vorteil des erfindungsgemäßen elektromagnetischen Linearaktors, dessen Stator sowohl den mindestens einen Permanentmagneten als auch die mindestens eine Spule aufweist, besteht in der Reduzierung des Ankermasse bzw. des Gewichts des Ankers. Gegenüber bekannten Ausgestaltungen eines Linearaktors nach dem Reluktanzprinzip, deren Anker entweder den mindestens einen Permanentmagneten oder die mindestens eine Spule trägt, ist der erfindungs gemäße Anker von dieser Last befreit. Denn der erfindungsgemäße Anker ist in Längsrichtung als Joch aus ferromagnetischen Material für das Leitelement ausgebildet. Betrug der Anteil der Ankermasse an der Gesamtmasse des Linearaktors bei bekannten Ausgestaltungen oftmals etwa 50 %, so kann die Ankermasse des erfindungsgemäßen Linearaktors auf ca. 15 % der Gesamtmasse des Linearaktors reduziert werden. Die Kraft des Linearaktors bleibt trotz Reduzierung der Ankermasse erhalten. Durch die Verlagerung des mindestens einen Permanentmagneten bzw. der Spule von dem Anker auf den Stator, verringert sich auch die Masse des Linearaktors, die beispielsweise zur Steuerung der Steuermembran dient. Durch die Verlagerung sinkt das statische Magnetfeld im Anker außerdem ab und die Überlagerung der Magnetfelder findet größtenteils in dem unteren bzw. oberen Abschnitt des Leitelements statt. Somit kann eine Wandstärke des Ankers, also seine Erstreckung in Querrichtung, besonders klein gehalten werden, ohne eine magnetische Sättigung zu fürchten. Deshalb kann die Wandstärke oder der Durchmesser des Ankers so weit reduziert werden, bis sich das ferromagnetische Material des Ankers bei einer vollen Bestromung der mindestens einen Spule wieder nahe der Sättigung befindet.

Mit der Reduzierung der Ankermasse verringert sich auch die schwingende Masse des Hydrolagers, des Fahrwerklagers oder der Vorrichtung, die jeweils einen entsprechenden Linearaktor aufweisen können, was zu einem Anstieg der ersten Systemeigenfrequenz des Hydrolagers, des Fahrwerklagers beziehungsweise der Vorrichtung führt. Korrespondierend erhöht sich die unterste Frequenz, zu der bei dem Hydrolager, dem Fahrwerklager beziehungsweise der Vorrichtung eine Resonanz auftritt.

Mit der Reduzierung der Ankermasse ist es deshalb möglich, die Steuermembran des Hydrolagers im Bereich von hochfrequenten Schwingungen, insbesondere in einem Frequenzbereich von 20 Hz bis 300 Hz, vorzugsweise im Frequenzbereich von 20 Hz bis 200 Hz, zu steuern. Das erfindungsgemäße Hydrolager ist deshalb dazu ausgebildet, Schwingungen auch im hochfrequenten Bereich zu isolieren. Entsprechende Effekte können bei einer Verwendung für ein Fahrwerklager oder für andere Vorrichtungen auftreten. Bei einem Einsatz des Hydrolagers als Motorlager zur Lagerung eines Motors an einem Chassis eines Kraftfahrzeuges trägt das erfindungsgemäße Hydrolager wesentlich dazu bei, Geräuschemissionen im Fahrzeuginnenraum, die durch den Motor verursacht werden, zu reduzieren. Hierbei treten sowohl Körperschall als auch Luftschall auf.

Eine bevorzugte Ausgestaltung des Linearaktors zeichnet sich dadurch aus, dass der Anker frei von Permanentmagneten und Spulen ist. Der Anker kann deshalb besonders leicht und/oder klein ausgebildet sein. Das Magnetfeld des Linearaktors wird außerdem ausschließlich von dem Stator verursacht. Wird das Hydrolager in dieser Ausgestaltung des Linearaktors mit hochfrequenten Schwingungen beaufschlagt, wirken diese über die Steuermembran auf den Anker, der aufgrund seiner verringerten Masse einer derartigen hochfrequenten Schwingung folgen kann. Das Hydrolager in einer derartigen Ausbildung eignet sich deshalb besonders gut zur Isolation von hochfrequenten Schwingungen.

Der erfindungsgemäße Linearaktor zeichnet sich dadurch aus, dass das Leitelement einen sich in Längsrichtung des Linearaktors erstreckenden Längsabschnitt, einen sich in Querrichtung des Linearaktors erstreckenden, unteren Kragen und einen sich in Querrichtung des Linearaktors erstreckenden, oberen Kragen aufweist, wobei der obere Kragen von dem unteren Kragen in Längsrichtung beabstandet ist. Das Leitelement weist also einen oberen Kragen und einen unteren Kragen sowie einen sich zwischen den Kragen erstreckenden Längsabschnitt auf. Grundsätzlich kann sich der Längsabschnitt in Längsrichtung über die Kragen hinaus erstrecken. Es ist jedoch bevorzugt, dass der Längsabschnitt in Längsrichtung mit dem jeweiligen Kragen endet. Somit ist das Leitelement im Querschnitt vorzugsweise C-förmig oder kammförmig ausgebildet. Es eignet sich deshalb dazu, den mindestens einen Permanentmagneten und/oder die mindestens eine Spule zu übergreifen. Um die jeweiligen, von dem oberen Kragen und unteren Kragen gebildeten Enden des Leitelements für ein Magnetfeld zu schließen, ist der Anker aus ferromagnetischen Material und in Längsrichtung als Joch für das Leitelement ausgebildet. Wie zuvor ausgeführt, wird der Anker bei einer Bestromung der mindestens einen Spule des Stators in Längsrichtung in den Hohlraum des Stators gezogen. Für die Ausgestaltung des Leitelements mit Kragen ist die Zugbewegung des Ankers auf eine konstruktive Überlagerung des von der mindestens einen Spule verursachten Spulenmagnetfelds und des Permanentmagnetfelds am oberen Kragen und einer destruktiven Überlagerung des Spulenmagnetfelds und des Permanentmagnetfelds am unteren Kragen zurückzuführen, oder umgekehrt. Die Kraftwirkung beruht also darauf, dass der Anker in Längsrichtung ein Joch aus ferromagnetischen Material für das Leitelement ausbildet und das Spulenmagnetfeld von dem Permanentmagnetfeld an einem der Kragen geschwächt und an dem anderen Kragen gestärkt wird. Somit ist es wesentlich, dass der Anker aus ferromagnetischem Material ist, um ein Joch zwischen dem oberen Kragen des Leitelements und dem unteren Kragen des Leitelements zu bilden.

Eine weitere bevorzugte Ausgestaltung des Linearaktors zeichnet sich dadurch aus, dass der mindestens eine Permanentmagnet benachbart zu einem der Kragen angeordnet ist. Die damit bestimmte Nähe zwischen dem mindestens einen Permanentmagneten und dem einen Kragen stellt sicher, dass das Permanentmagnetfeld ein Spulenmagnetfeld beeinflusst. Besonders bevorzugt ist der mindestens eine Permanentmagnet unmittelbar benachbart zu dem einen Kragen angeordnet. Es entsteht deshalb die gewünschte konstruktive oder destruktive Überlagerung der Magnetfelder, so dass der Anker durch Bestromung der mindestens einen Spule in Längsrichtung gesteuert bewegt werden kann. Besonders bevorzugt sind zwei Permanentmagneten, und zwar ein oberer Permanentmagnet und ein unterer Permanentmagnet, vorgesehen, wobei der obere Permanentmagnet zu dem oberen Kragen benachbart angeordnet ist und der untere Permanentmagnet zu dem unteren Kragen benachbart angeordnet ist.

Der erfindungsgemäße Linearaktor zeichnet sich dadurch aus, dass jeder der Kragen den Längsabschnitt in gleicher Querrichtung überragt, wobei der mindestens eine Permanentmagnet und/oder die mindestens eine Spule zwischen den Kragen angeordnet ist bzw. sind. Die Querrichtung ist quer zur Längsrichtung ausgebildet. Die beiden Kragen und der Längsabschnitt können deshalb im Querschnitt C-förmig oder kammförmig zueinander angeordnet sein. Die Öffnung dieser C-Form bzw. Kammform zeigt dabei bevorzugt zu dem Anker. In Längsrichtung zwischen dem oberen Kragen und dem unteren Kragen bildet sich vorzugsweise ein Aufnahmebereich aus, in den der mindestens eine Permanentmagnet und/oder die mindestens eine Spule eingesetzt sind. Somit können die Kragen, der mindestens eine Permanentmagnet und/oder die mindestens eine Spule in Längsrichtung hintereinander angeordnet sein. Indem der Anker als Joch für das Leitelement ausgebildet ist, wird ein von der Spule verursachtes Spulenmagnetfeld durch das Leitelement und den Anker ringförmig gebündelt. Durch diese Ausgestaltung des Hydrolagers können besonders hohe Kräfte des zugehörigen Linearaktors gewährleistet werden.

Eine weitere bevorzugte Ausgestaltung des Linearaktors zeichnet sich dadurch aus, dass der mindestens eine Permanentmagnet und die mindestens eine Spule in Längsrichtung hintereinander angeordnet sind. Mit dieser Ausgestaltung erstrecken sich der mindestens eine Permanentmagnet und die mindestens eine Spule in Längsrichtung. Der Linearaktor weist deshalb eine besonders geringe Breite oder einen besonders geringen Durchmesser - also die jeweilige Erstreckung des Linearaktors in einer Richtung quer zur Längsrichtung - auf. Ein derartiger Linearaktor bietet sich vorteilhaft an, um in besonders schmalen Bauräumen, beispielsweise im Vorderwagen eines Kraftfahrzeugs, verwendet zu werden.

Eine weitere bevorzugte Ausgestaltung des Linearaktors zeichnet sich dadurch aus, dass jede Spule in Längsrichtung zwischen zwei der Permanentmagneten angeordnet ist. Das Permanentmagnetfeld jedes der beiden Permanentmagneten ist vorzugsweise in Querrichtung ausgerichtet. Sie sind also bevorzugt gleichsinnig ausgerichtet. Durch die Wahl von zwei voneinander getrennten Permanentmagneten ist es besonders einfach möglich, dass Spulenmagnetfeld an einem der beiden Kragen des Leitelement konstruktiv zu überlagern und das Spulenmagnetfeld an dem anderen Kragen destruktiv zu überlagern. Diese Ausgestaltung des Linearaktors zeichnet sich deshalb durch ihren einfachen und effektiven Aufbau aus. Alternativ kann es vorgesehen sein, dass zwischen den zwei Permanentmagneten mehrere Spulen angeordnet sind. Diese mehrere Spulen überlagern sich jedoch in ihrer Wirkungsweise zu einer gemeinsamen Spule mit einem gemeinsamen Spulen Magnetfeld, so dass die zuvor genannten Effekte in der Zusammenwirkung mit den Permanentmagneten analog gelten.

Eine weitere bevorzugte Ausgestaltung des Linearaktors zeichnet sich dadurch aus, dass jeder Permanentmagnet in Längsrichtung zwischen zwei der Spulen angeordnet ist.

Hiermit ist es ebenfalls möglich, eine unsymmetrische Verstimmung der sich überlagernden Magnetfelder zu erreichen, so dass der Anker durch ein Bestromen der Spulen in Längsrichtung gesteuert bewegt werden kann.

Eine weitere bevorzugte Ausgestaltung des Linearaktors zeichnet sich dadurch aus, dass der Permanentmagnet oder mindestens einer der Permanentmagneten in Querrichtung hinter oder vor der mindestens einen Spule angeordnet ist. Der mindestens eine Permanentmagnet und die mindestens eine Spule können also in Querrichtung des Stators hintereinander angeordnet sein. Der Stator und/oder der Anker können deshalb in ihrer jeweiligen Längsrichtung besonders kurz ausgebildet sein. Außerdem hat sich in der Praxis gezeigt, dass diese Ausgestaltung besonders hohe Kräfte des Linearaktors bietet. Vorteilhaft ist dazu eine Anordnung des Permanentmagneten oder der mehreren Permanentmagneten in Querrichtung zwischen der mindestens einen Spule und dem Anker. Ist der Stator ringförmig ausgestaltet, so ist es für eine bevorzugte Ausgestaltung vorgesehen, dass der mindestens eine Permanentmagnet radial innenseitige zu der mindestens einen Spule angeordnet ist.

Eine weitere bevorzugte Ausgestaltung des Linearaktors zeichnet sich dadurch aus, dass jede Spule unmittelbar an mindestens einen der Permanentmagnete grenzt. Diese Ausgestaltung stellt sicher, dass ein jedes, von einer Spule verursachtes Spulenmagnetfeld von mindestens einem Permanentmagnetfeld überlagert wird. Dies stellt auch bei einer Bewegung des Ankers die gewünschte konstruktive bzw. destruktive Überlagerung der Magnetfelder sicher.

Der erfindungsgemäße Linearaktor zeichnet sich dadurch aus, dass sich das Joch in Längsrichtung von einem unteren Steg über einen Mittenabschnitt zu einem oberen Steg erstreckt, wobei jeder der Stege den Mittenabschnitt in Querrichtung überragt. Mit dieser Ausgestaltung des Ankers werden die in das Joch induzierten Magnetfelder ebenfalls C-förmig gebündelt. In der Praxis hat sich herausgestellt, dass mit einer derartigen Bündelung besonders große Kräfte in Längsrichtung des Ankers erreicht werden können. Korrespondierend kann der Anker kompakter ausgestaltet werden, um eine gleich große Kraft, beispielsweise auf die Steuermembran des Hydrolagers, aufbringen zu können. Mit einer kompakteren Ausgestaltung des Ankers vergrößert sich darüber hinaus die erste Systemeigenfrequenz, so dass ein derartiger Linearaktor eine noch weiter erhöhte Resonanzfrequenz aufweist. Das Hydrolager mit einem derartigen Linearaktor eignet sich deshalb zur effektiven Isolation von noch hochfrequenteren Schwingungen.

Der erfindungsgemäße Linearaktor zeichnet sich dadurch aus, dass jeder obere Steg und jeder obere Kragen in einer gemeinsamen oberen Ebene und/oder jeder untere Steg und jeder untere Kragen in einer gemeinsamen unteren Ebene angeordnet sind. Dies gilt insbesondere im Statischen Fall. Somit bestimmt ein Abstand zwischen dem oberen Kragen und dem oberen Steg bzw. ein Abstand zwischen dem unteren Kragen und dem unteren Steg die Breite des Luftspalts zwischen dem Stator und dem Anker. Um den Luftspalt möglichst klein auszugestalten und somit die magnetischen Verluste zu verringern, brauchen ausschließlich die Stege und/oder die Kragen besonders präzise hergestellt werden. Dies kann mit einem relativ geringen Herstellungsaufwand gewährleistet werden.

Eine weitere bevorzugte Ausgestaltung des Linearaktors zeichnet sich dadurch aus, dass das Leitelement mindestens einen Finger aufweist, der in einen Raum zwischen Spule und benachbartem Permanentmagneten greift. Diese Ausgestaltung kann insbesondere dann Anwendung finden, wenn eine Vielzahl von Permanentmagneten und eine Vielzahl von Spulen jeweils abwechselnd hintereinander in Längsrichtung des Stators angeordnet sind. In diesem Fall können die Finger des Leitelements zur Bündelung der jeweiligen Magnetfelder beitragen. Dies verringert die magnetischen Verluste.

Der erfindungsgemäße Linearaktor zeichnet sich dadurch aus, dass eine Magnetfeldrichtung der Permanentmagneten in Querrichtung ausgerichtet ist. In der Praxis wurde festgestellt, dass die gleichsinnig Ausrichtung der Magnetfeldrichtung der Permanentmagneten zu einer gleichmäßigen Überlagerung des Spulenmagnetfelds dient. Ein Linearaktor mit derart ausgebildeten Permanentmagneten weist deshalb eine bevorzugte lineare Übertragungsfunktion auf. Bei einem Hydrolager mit einem derartigen Linearaktor ist die Steuermembran deshalb besonders präzise steuerbar, so dass gemessene Schwingungen besonders gut isoliert werden können.

Eine weitere bevorzugte Ausgestaltung des Linearaktors zeichnet sich dadurch aus, dass eine Magnetfeldrichtung der mindestens einen Spule in Längsrichtung ausgerichtet ist. Gemeint ist damit das Spulenmagnetfeld, welches unmittelbar aus der jeweiligen Spule austritt. Dies wird daraufhin von dem Leitelement und dem Anker ringförmig gebündelt, so dass es von dem mindestens einen Permanentmagnetfeld destruktiv bzw. konstruktiv überlagert werden kann.

Eine weitere bevorzugte Ausgestaltung des Linearaktors zeichnet sich dadurch aus, dass der Anker mittels einer Gleitlagerung gelagert ist. Die Gleitlagerung ermöglicht, dass der Anker in Längsrichtung des Stators gleiten kann. Unter der Gleitlagerung kann also auch ein Gleitlager verstanden werden. Anders als bei den aus dem Stand der Technik bekannten Membranfedern zur Lagerung des Ankers sind für eine Gleitlagerung keine von dem Anker radial nach außen tragende Arme notwendig, die an dem Stator befestigt sind. Der Anker kann also einen besonders kleinen Querschnitt aufweisen, ohne dass über seine radial außenseitigen Wandung Elemente hervorragen, die zur Kollision mit anderen Bauteilen des Linearaktors oder wenn der Linearaktor für ein Hydrolager verwendet wird, zu einer Kollision mit Bauteilen des Hydrolagers neigen. Mit anderen Worten sind an dem Anker keine armähnlichen Elemente angebracht, die eine Hubbewegung des Ankers ungewollt bremsen.

Bei der Gleitlagerung ist darüber hinaus festzuhalten, dass ein Gleitwiderstand unabhängig von der Auslenkung des Ankers in Längsrichtung relativ zum Stator ist. Das bedeutet, dass der Anker auch einen großen Hub ausführen kann, ohne dass es zu proportional erhöhten Reaktionskräften kommt, die ausschließlich vom Anker hervorgerufen werden. Hierbei bleiben zunächst die Reaktionskräfte außer Betracht, die beispielsweise bei der Verwendung für ein Hydrolager von einer zugehörigen Steuermembran ausgehen können. Der Linearaktor mit der Gleitlagerung des Ankers weist deshalb keine auslenkungsabhängige Steifigkeit auf. Somit sind für den Aktor keine Kraftreserven konstruktiv vorzuhalten, um eine größere Auslenkung des Ankers auszuführen. Deshalb kann ein derartiger Aktor eine besonders kleine Bauform aufweisen. In der Praxis wurde außerdem festgestellt, dass ein Gleitlager eine höhere Lebensdauer als eine Membranfeder zur Lagerung des Ankers aufweist.

Eine weitere bevorzugte Ausgestaltung des Linearaktors zeichnet sich dadurch aus, dass die Gleitlagerung zumindest im Wesentlichen frei von ferromagnetischem Material ist. Dies gilt insbesondere für die Teile der Gleitlagerung, die nicht von dem Anker und/oder dem Stator gebildet sind. Indem zumindest die übrigen Teile der Gleitlagerung frei von ferromagnetischem Material sind, können diese auch keinen negativen Einfluss bei einem Auslenken des Ankers relativ zu dem Stator hervorrufen. Insbesondere gehen von nicht ferromagnetischen Materialien keine Rückstellkräfte aus, die auf einer magnetischen Wechselwirkung beruhen. Somit ist ein derartiger Aktor besonders präzise steuerbar.

Eine weitere bevorzugte Ausgestaltung des Linearaktors zeichnet sich dadurch aus, dass der Anker an einer zugehörigen, dem Stator zugewandten Seite eine Lagerfläche der Gleitlagerung bildet, und an einer dem Anker zugewandten Statorseite ein Gleitelement der Gleitlagerung befestigt ist, das mit einer zugehörigen, dem Anker zugewandten Seite eine Gegenlagerfläche der Gleitlagerung bildet. Mit der Seite des Ankers bzw. mit der Seite des Stators sind jeweils zugehörige äußere Seiten gemeint. Für die Lagerung des Ankers liegt der Anker mit der Lagerfläche in Längsrichtung gleitend beweglich an der Gegenlagerfläche an. Die Gegenlagerfläche wird von dem Gleitelement gebildet, so dass das Gleitelement zur Übertragung von Kräften in Querrichtung des Aktors ausgebildet ist. Um auch bei einer Auslenkung des Ankers in Längsrichtung eine gute Lagerung zu gewährleisten, ist das Gleitelement an dem Stator befestigt. Damit ergibt sich eine ortsfeste Anordnung des Gleitelements an dem Stator, was die konstruktive Auslegung erleichtert und die Lebensdauer des Aktors vergrößert. Denn durch die Befestigung des Gleitelements an dem Stator kann ein unbeabsichtigtes Verrutschen des Gleitelements sicher verhindert werden.

Eine weitere bevorzugte Ausgestaltung des Linearaktors zeichnet sich dadurch aus, dass das Gleitelement in Längsrichtung L des Linearaktors zwischen dem oberen Kragen und dem unteren Kragen angeordnet ist. Das Gleitelement dient zur Übertragung von Kräften in Querrichtung, die zwischen dem Stator und dem Anker wirken können. In dem das Gleitelement zwischen dem oberen Kragen und dem unteren Kragen angeordnet ist, grenzt das Gleitelement in Längsrichtung allenfalls bis an den oberen Kragen bzw. den unteren Kragen an. Das Gleitelement erstreckt sich jedoch in Längsrichtung nicht darüber hinaus. Mit anderen Worten werden die von den beiden Kragen gebildeten Statorpolflächen nicht von dem Gleitelement bedeckt. Um die zwischen dem Anker und dem Stator in Querrichtung wirkenden Kräfte übertragen zu können, hat es sich in der Praxis gezeigt, dass das Gleitelement eine bestimmte, sich in Querrichtung erstreckende Gleitelementbreite bzw. Gleitelementdicke aufweisen sollte, um eine ausreichende strukturelle Stabilität zu erreichen. Indem das Gleitelement sich in Längsrichtung nicht bis über die Kragen erstreckt, wird ein Abstand zwischen dem Anker und den von den Kragen gebildeten Statorpolflächen nicht durch die Gleitelementbreite bestimmt. Denn bei einer C-förmigen Ausgestaltung kann das Gleitelement zumindest teilweise übergriffen werden. Somit erlaubt diese Ausgestaltung des Aktors einen Abstand in Querrichtung zwischen den Statorpolflächen und dem Anker oder den zugehörigen Ankerpolflächen zumindest im Wesentlichen frei von der Gleitelementbreite und deshalb besonders klein auszugestalten. Ein besonders kleiner Abstand zwischen den Statorpolflächen und dem Anker oder den zugehörigen Ankerpolflächen reduziert einen zugehörigen, magnetischen Widerstand zwischen den Statorpolflächen und dem Anker, bzw. den Ankerpolflächen, was die Leistungsfähigkeit des Aktors bzw. die Kompaktheit des Aktors steigert.

Eine weitere bevorzugte Ausgestaltung des Linearaktors zeichnet sich dadurch aus, dass das Gleitelement zwischen dem unteren Kragen und dem oberen Kragen in den Stator einfasst. Der Stator kann also zwischen dem unteren Kragen und dem oberen Kragen eine Vertiefung aufweisen, in die das Gleitelement eingesetzt und sodann an dem Stator befestigt ist. Dies erlaubt eine formschlüssige und kraftschlüssige Verbindung zwischen dem Gleitelement und dem Stator. Eine derartige Ausgestaltung ist besonders robust und langlebig. Darüber hinaus kann das Gleitelement eine ausreichende Gleitelementbreite bzw. Gleitelementdicke aufweisen, die für die mechanische Stabilität des Gleitelements von Vorteil ist, ohne dass dies zu einem weiten Herausragen des Gleitelements aus dem Stator führen muss. Außerdem bietet diese Ausgestaltung die Möglichkeit, den Abstand zwischen den Statorpolflächen und dem Anker oder den zugehörigen Ankerpolflächen weitestgehend unabhängig von der Gleitelementbreite konstruktiv auszugestalten.

Eine weitere bevorzugte Ausgestaltung des Linearaktors zeichnet sich dadurch aus, dass das Gleitelement in Querrichtung über die von den Kragen gebildeten Statorpolflächen hinausragt. Grundsätzlich könnte die zuvor genannte Vertiefung derart ausgestaltet sein, um das Gleitelement vollständig aufzunehmen. In diesem Fall besteht jedoch die Gefahr, dass der Anker in mechanischen Kontakt mit den Kragen bzw. den Statorpolflächen kommt, was zu einer starken mechanischen Reibung führen kann. Diese mechanische Reibung ist jedoch zu vermeiden, um auch über eine längere Betriebsdauer ein gleichmäßiges Betriebsverhalten des Aktors zu erreichen. Bevorzugt ist das Gleitelement deshalb derart an dem Stator befestigt und/oder in eine Vertiefung zwischen den Kragen eingesetzt, dass das Gleitelement in Querrichtung über die von den Kragen gebildeten Statorpolflächen hinausragt. Bevorzugt bildet der Anker mit einer dem Gleitelement zugewandten Seite eine Lagerfläche und das Gleitelement mit einer dem Anker zugewandten Seite eine Gegenlagerfläche, wobei die Lagerfläche in Längsrichtung gleitend beweglich auf der Gegenlagerfläche anliegt. Durch das Hinausragen des Gleitelements über die Kragen des Stators kann der Anker kontaktlos über die Kragen bzw. die Statorpolflächen gleiten. Dies gewährleistet eine besonders hohe Lebensdauer des Aktors. Darüber hinaus kann der Abstand zwischen den Statorpolflächen und dem Anker, oder den zugehörigen Ankerpolflächen, durch eine Höhe bestimmt sein, mit der das Gleitelement die Kragen in Querrichtung überragt. Mit anderen Worten kann durch die konstruktive Ausgestaltung des Gleitelements der zuvor genannte Abstand zwischen dem Anker oder den Ankerpolflächen und den Statorpolflächen konstruktiv bestimmt werden. Da sich das Gleitelement nicht über die Statorpolflächen überdeckend erstreckt, entsteht zwischen den Statorpolflächen und dem Anker bzw. den Ankerpolflächen ein Spalt. Dies ist vorzugsweise ein Luftspalt.

Eine weitere bevorzugte Ausgestaltung des Linearaktors zeichnet sich dadurch aus, dass die Lagerfläche der Gleitlagerung und die für das Joch vorgesehenen Ankerpolflächen an einer gemeinsamen, ununterbrochenen Ankerseite ausgebildet sind. Ein Übergang von der Lagerfläche zu einer der Ankerpolflächen ist deshalb stetig. Besonders bevorzugt sind die Lagerfläche und die Ankerpolflächen in einer Flucht zueinander ausgerichtet. Sie können also in einer gemeinsamen Ebene angeordnet sein oder eine gemeinsame, zylindrische Fläche bilden. Der Vorteil dieser Ausgestaltung zeigt sich insbesondere dann, wenn der Anker in Längsrichtung ausgelenkt wird. Dabei soll beispielhaft berücksichtigt werden, dass sich das Gleitelement von dem oberen Kragen bis zu dem unteren Kragen des Stators erstreckt und in Querrichtung über die Kragen in Richtung des Ankers hervorragt. Im Ruhezustand des Aktors liegt der Anker mit der Lagerfläche an der von dem Gleitelement gebildeten Gegenlagerfläche an. Vorzugsweise grenzt in Längsrichtung oberhalb der Gegenlagerfläche sowie in Längsrichtung unterhalb der Gegenlagerfläche jeweils eine Ankerpolfläche an. Indem die Gegenlagerfläche und die Ankerpolflächen ununterbrochen ineinander übergehen, wird ein Auslenken des Ankers in Längsrichtung nicht von den Ankerpolflächen gehindert. Vielmehr kann es zu einer Neuaufteilung der Seite des Ankers kommen, an der die Gegenlagerfläche und die Ankerpolflächen von dem Anker gebildet sind. Wird der Anker beispielsweise in Längsrichtung nach oben ausgelenkt, erfolgt eine relative Verschiebung der Gegenlagerfläche in Längsrichtung nach unten an der zuvor genannten Seite des Ankers. Wo zuvor an einem unteren Abschnitt des Ankers noch eine ausschließlich als Ankerpolfläche ausgebildete Fläche an der genannten Seite des Ankers gebildet war, liegt nunmehr auch das Gleitelement an dem Anker an. Auch hier können sodann Kräfte in Querrichtung übertragen werden, was die Ausrichtung des Ankers relativ zum Stator weiterhin gewährleistet. Somit können die Gegenlagerfläche und die Ankerpolflächen jeweils eine Doppelfunktion aufweisen, zumindest abschnittsweise, wenn der Anker in Längsrichtung ausgelenkt wird. Eine besonders einfache Ausgestaltung des Ankers, der an einer Seite sowohl eine Lagerfläche als auch Ankerpolflächen in einer gemeinsamen Flucht aufweist, kann beispielsweise als ein einstückiger Anker aus oder mit einem ferromagnetischen Material ausgestaltet sein. Weiter bevorzugt kann dies insbesondere für den Abschnitt des Ankers gelten, der zumindest in der Ruhestellung gegenüberliegend zu dem Stator ist. So kann der Anker bzw. der zugehörige Abschnitt beispielsweise als ein hohlzylindrisches Bauteil aus oder mit einem ferromagnetischen Material mit einer zylindrischen, radial außenseitigen Mantelfläche ausgestaltet sein. Diese Mantelfläche bildet sodann sowohl die Gegenlagerfläche als auch die Ankerpolflächen aus. Eine derartige zylindrische Mantelfläche weist keine Hinterschneidungen oder sonstige unstetige Übergänge auf. Besonders bevorzugt weist der Anker an der Gegenlagerflächen und den Ankerpolflächen eine zumindest im Wesentlichen gleiche Oberflächenrauheit auf. Diese ist vorzugsweise sehr klein. So können die genannten Oberflächen poliert ausgestaltet sein. Somit kann der Anker mit einer besonders geringen Reibung in Längsrichtung ausgelenkt werden, wobei die zylindrische Mantelfläche des Ankers an dem Gleitelement in Längsrichtung gleiten kann.

Der erfindungsgemäße Linearaktor zeichnet sich dadurch aus, dass eine Statorpolfläche des Stators und eine zu der Statorpolfläche gegenüber angeordnete Ankerpolfläche des Ankers in Querrichtung des Linearaktors durch einen Spalt voneinander beabstandet sind. Eine weitere bevorzugte Ausgestaltung des Linearaktors zeichnet sich dadurch aus, dass eine Spaltbreite des Spalts kleiner als eine Gleitelementbreite des Gleitelements ist. Dies gilt vorzugsweise für jede Statorpolfläche des Stators die durch einen Spalt von einer jeweils gegenüber angeordneten Ankerpolfläche beabstandet angeordnet ist. Spaltbreite ist der Abstand in Querrichtung des Aktors zwischen einer Statorpolfläche und einer in Querrichtung des Aktors gegenüber angeordneten Ankerpolfläche. Die Gleitelementbreite ist die Erstreckung des Gleitelements in Querrichtung des Aktors. Das Gleitelement ist vorzugsweise in eine Vertiefung bzw. einen Aufnahmeraum zwischen den Kragen des Stators eingesetzt. Dabei ist es weiterhin bevorzugt vorgesehen, dass das Gleitelement die Kragen in Querrichtung zum Anker hin überragt. Die Höhe, mit der das Gleitelement die Kragen überragt, hängt also davon ab, wie tief das Gleitelement in die Vertiefung eingesetzt ist. Somit kann die Tiefe der Vertiefung konstruktiv auch die Höhe bestimmen, mit der das Gleitelement die Kragen überragt. Der Anker liegt mit der Lagerfläche an der Gegenlagerfläche des Gleitelements an. Somit bestimmt die zuvor genannte Höhe auch die Spaltbreite. Die genannte Höhe und folglich auch die Spaltbreite sind jeweils kleiner als die Gleitelementbreite. Somit kann die Gleitelementbreite derart ausgestaltet sein, dass das Gleitelement eine vorteilhafte strukturelle Stabilität aufweist. Die sich daraus ergebende Spaltbreite erhöht jedoch nicht die vorzugsweise geringe Spaltbreite, da das Gleitelement in die genannte Vertiefung des Stators eingesetzt werden kann. Mit anderen Worten kann für den Aktor eine besonders geringe Spaltbreite konstruktiv gewählt werden und gleichzeitig ein mechanisch stabiles Gleitelement für die Gleitlagerung des Ankers verwendet werden.

Eine bevorzugte Ausgestaltung des Hydrolagers mit dem erfindungsgemäßen Linearaktor zeichnet sich dadurch aus, dass der Anker aus dem Joch oder dem Joch und einer Halterung zum Verbinden des Jochs mit der Steuermembran besteht. Der Anker erfüllt in dieser Ausgestaltung im Wesentlichen zwei Aufgaben. Einerseits ist er aus ferromagnetischem Material um ein Joch zwischen dem oberen Abschnitt des Leitelements und dem unteren Abschnitt des Leitelements zu bilden. Andererseits ist der Anker mechanisch mit der Steuermembran verbunden, um diese derart auslenken, so dass es in der Arbeitskammer zu einer Veränderung des zugehörigen Volumens kommt. Hierzu kann der Anker unmittelbar mit der Steuermembran mechanisch verbunden sein. Alternativ können eine Halterung und/oder ein Mechanismus vorgesehen sein, die bzw. der zum Verbinden des Ankers mit der Steuermembran ausgebildet sind. Der Anker ist deshalb besonders einfach und/oder kompakt ausgestaltet. Dies begünstigt ein geringes Gewicht des Ankers, so dass dieser eine besonders hohe erste Systemeigenfrequenz des Hydrolagers gewährleistet.

Gemäß einem weiteren Aspekt wird die eingangs genannte Aufgabe außerdem durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch das erfindungsgemäße Hydrolager, insbesondere nach einem der vorhergehenden Ausgestaltungen, ausgebildet ist. Dabei gelten Merkmale, Details und Vorteile, die im Zusammenhang mit dem erfindungsgemäßen Hydrolager und/oder dem Linearaktors beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematisch Querschnittsansicht eines Hydrolagers,
- Fig. 2: eine schematische Querschnittsansicht einer ersten Ausgestaltung eines Linearaktors,
- Fig. 3: eine schematische Querschnittsansicht einer zweiten Ausgestaltung eines Linearaktors,
- Fig. 4: eine schematische Querschnittsansicht einer dritten Ausgestaltung eines Linearaktors, und
- Fig. 5: eine schematische Querschnittsansicht einer weiteren Ausgestaltung eines Linearaktors nach einem Beispiel, das nicht in die Reichweite der Ansprüche fällt.

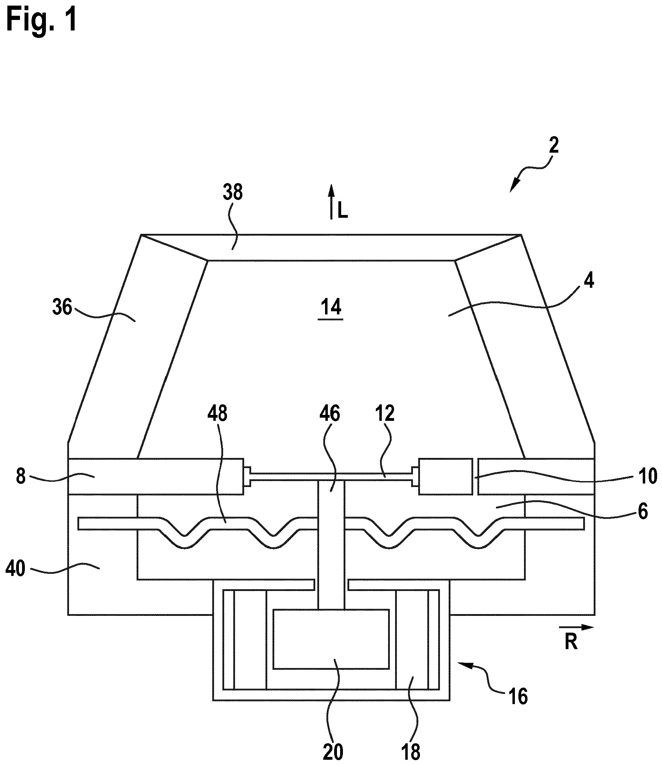

Aus der Figur 1 ist ein Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement (nicht dargestellt) zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. In Längsrichtung L unterhalb der Trennwand 8 schließt das hohlzylindrische Basisgehäuse 40 an, dessen Innenraum durch einen flexiblen Trennkörper 48 unterteilt ist. Der von der Trennwand 8, dem Trennkörper 48 und dem Basisgehäuse 40 eingeschlossene Raum bildet die Ausgleichskammer 6 des Hydrolagers 2. Die Ausgleichskammer 6 ist bevorzugt ebenfalls mit Hydraulikflüssigkeit gefüllt. Sie kann ebenfalls ein Gemisch aus Öl und Wasser sein. Aus der Figur 1 ist somit zu entnehmen, dass die Trennwand 8 zwischen der Arbeitskammer 4 und der Ausgleichskammer 6 angeordnet ist. Zur Dämpfung von niederfrequenten Schwingungen, die von dem Motor über die Abdeckung 38 auf die Tragfeder 36 und somit auch auf ein Arbeitskammervolumen 14 der Arbeitskammer 4 wirken, ist ein zwischen der Arbeitskammer 4 und der Ausgleichskammer 6 ausgebildeter Drosselkanal 10 zum Austausch von Hydraulikflüssigkeit vorgesehen. Wird die Tragfeder 36 durch die Schwingungen gestaucht, führt dies zumeist zu einer Erhöhung des Drucks der Hydraulikflüssigkeit in der Arbeitskammer 4 und/oder zu einer Verkleinerung des Arbeitskammervolumens 14 der Arbeitskammer 4. In beiden Alternativen erfolgt dabei ein Volumenstrom der Hydraulikflüssigkeit aus der Arbeitskammer 4 durch den Drosselkanal 10 in die Ausgleichskammer 6. Dabei entsteht in dem Drosselkanal 10 Dissipation, so dass die auf die Tragfeder 36 einwirkenden Schwingungen gedämpft werden können. Die Dämpfung mittels des Drosselkanals 10 ist jedoch nur für niederfrequentierte Schwingungen effektiv. Bei höherfrequenten Schwingungen, so beispielsweise ab 20 Hz, werden Schwingungen durch den Drosselkanal 10 so gut wie gar nicht gedämpft oder isoliert.

Zur Isolation von Schwingungen mit einer Frequenz von mehr als 20 Hz weist das Hydrolager 2 eine Steuermembran 12 auf. Diese Steuermembran 12 ist der Trennwand 8 zugeordnet. Die Steuermembran 12 kann dazu von Trennwand 8 selbst gebildet sein oder in die Trennwand 8 eingebracht sein. So kann die Trennwand 8 die Steuermembran 12 einfassen. Die Steuermembran 12 ist in Längsrichtung L des Hydrolagers 2 elastisch verformbar ausgestaltet. Entsprechend ihrer elastischen Verformbarkeit in Längsrichtung L vergrößert oder verkleinert sich das Arbeitskammervolumen 14 der Arbeitskammer 4. Diese Verformbarkeit der Steuermembran 12 wird vorteilhaft genutzt, um höherfrequente Schwingungen zu isolieren. Dazu ist die Steuermembran 12 an ihrer von der Arbeitskammer 4 abgewandten Seite mechanisch mit einem Anker 20 eines elektromagnetischen Linearaktors 16 des Hydrolagers 2 verbunden. Der Linearaktor 16 weist außerdem einen Stator 18 auf, zudem der Anker 20 beweglich gelagert angeordnet ist. Der Anker ist an dem Basisgehäuse 40 des Hydrolagers 2 befestigt oder von dem Basisgehäuse 40, zumindest teilweise, gebildet. Um die Bewegungsrichtung des Ankers 20 auf eine Bewegungsrichtung in Längsrichtung L zu beschränken, weist der Linearaktor 16 eine entsprechende Lagerung auf. Somit ist es möglich, mittels des elektromagnetischen Linearaktors 16 die elastische Verformung der Steuermembran 12 elektrisch zu steuern.

Außerdem ist aus der Figur 1 eine vorteilhafte Ausgestaltung des erfindungsgemäßen Hydrolagers 2 zu erkennen, bei der der Anker 20 mittels eines mechanischen Stößels 46, der dem Anker 20 zugeordnet ist, mit der Steuermembran 12 mechanisch verbunden. Durch den Stößel kann der Stator 18 des Linearaktors 16 von der Steuermembran 12 beabstandet angeordnet sein, so dass sich in dem Bereich zwischen dem Stator 18 und der Trennwand 8 die Ausgleichskammer 6 ausbilden kann. Eine derartige Ausgestaltung des Hydrolagers 2 hat sich in der Praxis als besonders zweckmäßig erwiesen. Anderweitige Ausbildungen, die ohne einen Stößel 46 oder anstatt des Stößels 46 eine andere Gelenksmechanik zur Übertragung von Kräften des Linearaktors 16 auf die Steuermembran 12 aufweisen, sollen ebenfalls als eine mechanische Verbindung zwischen dem Anker 20 und der Steuermembran 12 angesehen werden.

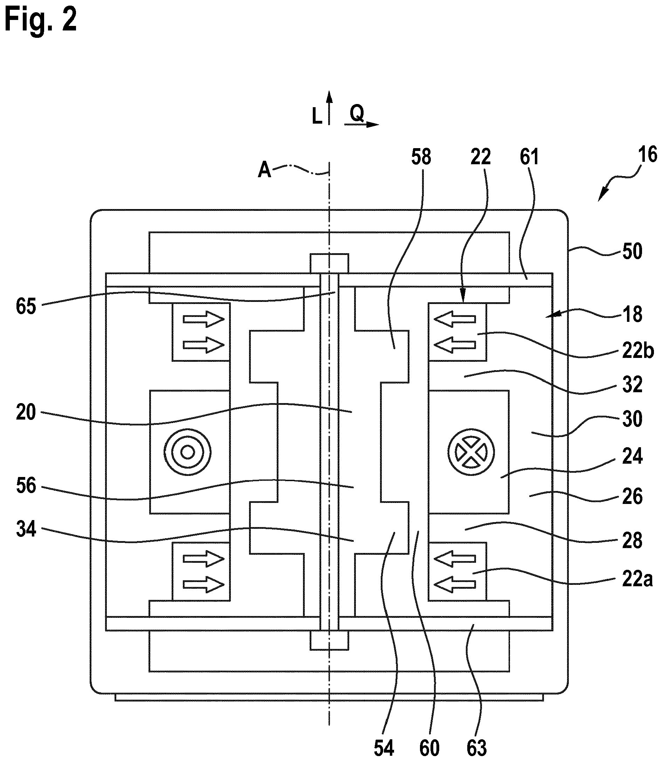

In der Figur 2 ist eine Ausgestaltungsvariante des elektromechanischen Linearaktors 16 detaillierter dargestellt. In einer derartigen Ausgestaltung kann der Linearaktor 16 auch für andere Zwecke und/oder Vorrichtungen, beispielsweise eine Fahrwerklager, Anwendung finden. Der Linearaktor 16 umfasst einen Stator 18 mit einem Statorgehäuse 50, mehreren Permanentmagneten 22 und einer Spule 24. Der Linearaktor 16 ist symmetrisch zu einer Achse A in Längsrichtung L ausgebildet. Die weiteren Erläuterungen beziehen sich deshalb zunächst auf die rechte Hälfte des Linearaktors 16. Aufgrund der Symmetrie weist der Linearaktor 16 an seiner gegenüberliegenden Hälfte analoge Merkmale, Ausgestaltungen und/oder Vorteile auf.

In Längsrichtung L betrachtet, weist der Linearaktor 16 einen unteren Permanentmagneten 22a und einen oberen Permanentmagneten 22b auf. Zwischen dem unteren Permanentmagneten 22a und dem oberen Permanentmagneten 22b ist die Spule 24 bzw. zumindest ein Teil der Spule 24 angeordnet. Radial außenseitig zu den beiden Permanentmagneten 22a, 22b und der Spule 24 ist ein Längsabschnitt 30 eines Leitelements 26 aus ferromagnetischen Material angeordnet. Das Leitelement 26 ist ein Teil des Stators 18. Das Leitelement 26 dient zur Bündelung eines Spulenmagnetfelds der Spule 24. Dazu weist das Leitelement 26 außerdem einen unteren Kragen 28 und einen oberen Kragen 32 auf, die sich jeweils von dem Längsabschnitt 30 in Querrichtung Q erstrecken. Wie aus der Figur 2 hervorgeht, greift der untere Kragen 28 zwischen den unteren Permanentmagneten 22a und die Spule 24. Der obere Kragen 32 greift hingegen zwischen den oberen Permanentmagneten 22b und die Spule 24. Durch den Längsabschnitt 30 und die beiden Kragen 28, 32 ist das Leitelement 26 kammförmig ausgebildet. Mit der entsprechenden Öffnung zwischen den beiden Kragen 28, 32 übergreift das Leitelement 26 die Spule 24. Mit ihren äußeren L-förmigen Abschnitten, die jeweils einen der beiden Kragen 28, 32 und ein jeweils angrenzendes Ende des Längsabschnitts 30 umfassen, übergreift das Leitelement 26 die beiden Permanentmagneten 22a, 22b.

Der erfindungsgemäße Anker 20 aus ferromagnetischen Material bildet ein Joch 34 für das Leitelement 26. Hierzu bedarf der Anker 20 weder eines Permanentmagneten noch einer Spule. Der Anker 20 ist deshalb frei von Permanentmagneten und/oder Spulen. In der Praxis hat es sich als zweckmäßig erwiesen, wenn sich das vom Anker 20 gebildete Joch 34 in Längsrichtung L von einem unteren Steg 54 über einen Mittenabschnitt 56 zu einem oberen Steg 58 erstreckt. Jeder der beiden Stege 54 ragt dabei in Querrichtung Q über den Mittenabschnitt 56 hervor. In einer Ruheposition des Ankers 20 ist der obere Steg 58 gegenüberliegend zu dem oberen Kragen 32 und der untere Steg 54 gegenüberliegend zu dem unteren Kragen 28 ausgerichtet. Mit anderen Worten sind der obere Steg 58 und der obere Kragen 32 in einer gemeinsamen, oberen Ebene und der untere Steg 54 und der untere Kragen 28 in einer gemeinsamen unteren Ebene angeordnet. Die Stege 54, 58 und die Kragen 28, 32 bestimmen somit einen Luftspalt 60, der zwischen dem Anker 20 und dem Stator 18 in Querrichtung Q ausgebildet ist.

Um zu gewährleisten, dass der Anker 20 die gewünschte Bewegung ausschließlich in Längsrichtung L ausführt, ist der Anker 20 an seiner Oberseite durch eine obere Führungsfeder 61 und an seiner Unterseite durch eine untere Führungsfeder 63 an dem Stator 18 gelagert angeordnet. Die beiden Führungsfeder 61, 63 verhindern, dass der Anker 20 eine Bewegung in Querrichtung Q ausführen kann.

Um eine Auslenkung des Ankers 20 in Längsrichtung zu bewirken, wird die Spule 24 bestromt. Dabei entsteht ein Spulenmagnetfeld, welches durch das Leitelement 26 und das Joch 34 gebündelt wird, so dass kreisförmige Magnetfeldlinien entstehen. Diese führen auch durch die beiden Kragen 28, 34. Benachbart zu den Kragen 28, 32 sind die beiden Permanentmagneten 22a, 22b angeordnet, die jeweils eine gemeinsame Magnetfeldausrichtung in Querrichtung Q aufweisen. Deshalb wird das gebündelte Spulenmagnetfeld bei einer Bestromung der Spule 24 in dem unteren Kragen 28 durch ein Permanentmagnetfeld des unteren Permanentmagneten 22a konstruktiv überlagert, wohingegen das gebündelte Spulenmagnetfeld in dem oberen Kragen 32 durch ein Permanentmagnetfeld des oberen Permanentmagneten 22b destruktiv überlagert wird, oder umgekehrt. Je nach Ausgestaltung der genannten Überlagerung erfolgt eine Bewegung des Ankers 20 in längsaxiale Richtung nach oben oder nach unten.

Zur Übertragung dieser Bewegung in Längsrichtung kann der Anker 20 bei der Verwendung des entsprechenden Linearaktors 16 für ein Hydrolager 2 unmittelbar an der Steuermembran 12 befestigt sein. Dem Anker 20 kann jedoch auch eine Halterung 65 zugeordnet sein, mit der der Anker 20 mechanisch mit der Steuermembran 12 verbunden ist. An diese Halterung 65 können auch die in Figur 2 dargestellten Blattfedern 68 radial außenseitig anschließen, die sich bis zu dem Stator 18 erstrecken, um den Anker 20 gegenüber dem Stator 18 zu lagern.

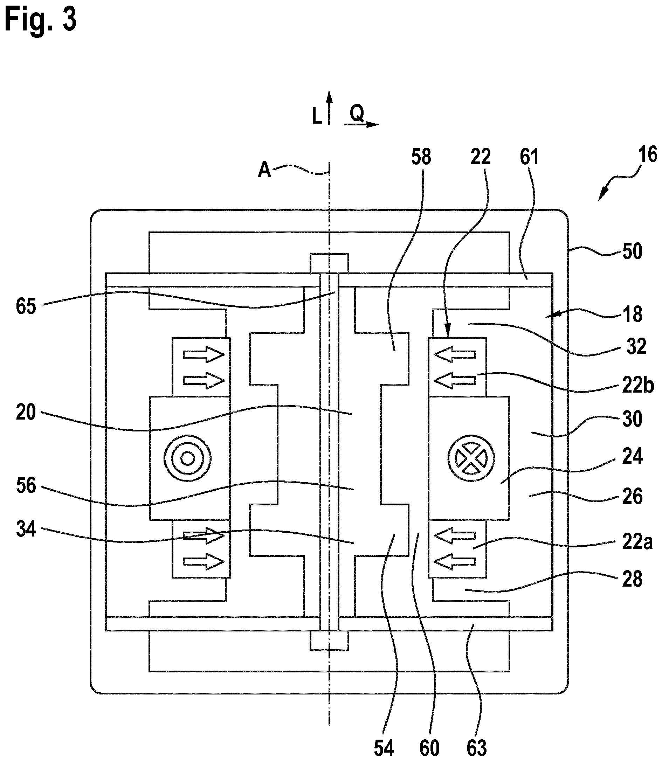

In der Figur 3 ist eine weitere Ausgestaltung des Linearaktors 16 schematisch dargestellt. Der Linearaktor 16 ist im Wesentlichen baugleich zu dem zuvor beschriebenen Linearaktor 16, wie dieser mit Bezug zu der Figur 2 erläutert wurde. Es gelten deshalb die analogen Erläuterungen, Merkmale und/oder Vorteile. Der Linearaktor 16 aus der Figur 3 unterscheidet sich jedoch in der Ausgestaltung des Leitelements 26 und der zugehörigen Anordnung der Permanentmagneten 22a, 22b und der Spule 24. Um die Unterschiede und die zugehörigen Effekte zu erläutern, wird wie zuvor auch darauf verwiesen, dass der Linearaktor 16 symmetrisch zu der Achse A aufgebaut ist. Deshalb wird im Folgenden der Aufbau der rechten Hälfte des Linearaktors 16 erläutert, wobei analoge Merkmale, Vorteile und Effekte für den übrigen Linearaktor 16 gelten.

Das Leitelement 26 erstreckt sich von einem unteren Kragen 28 über einen Längsabschnitt 30 zu einem oberen Kragen 32. Somit ist das Leitelement C-förmig ausgebildet. In eine entsprechende Öffnung der C-förmigen Ausbildung sind der untere Permanentmagnet 22a, die Spule 24 und der obere Permanentmagnet 22 eingebracht. Die Spule 24 ist zwischen den beiden Permanentmagneten 22a, 22b angeordnet. Das Leitelement 26 ist somit derart ausgebildet, dass es die Gruppierung aus Permanentmagneten 22a, 22b und der mindestens eine Spule 24 gemeinsam übergreift. Dazu überfassen die Kragen 28, 32 die längsseitigen Stirnseiten und der Längsabschnitt 30 eine querseitige Stirnseite der zuvor genannten Gruppierung. Die Permanentmagneten 22a, 22b und die Spule 24 sind deshalb von dem Leitelement 26 eingefasst. Erfolgt nun eine Bestromung der Spule 26, bildet sich wie zuvor ein Spulenmagnetfeld aus, wobei deren Magnetfeldlinien ringförmig von dem Leitelement 26 und dem vom Anker 20 ausgebildeten Joch 34 gebündelt werden. Außerdem sind die Permanentmagneten wieder unmittelbar zu den Kragen 28, 32 angeordnet, so dass eine analoge konstruktive bzw. destruktive Überlagerung mit dem zugehörigen Permanentmagnetfeld erfolgt. Der Anker 20 kann deshalb durch Bestromung der Spule 24 in Längsrichtung L gesteuert ausgelenkt werden.

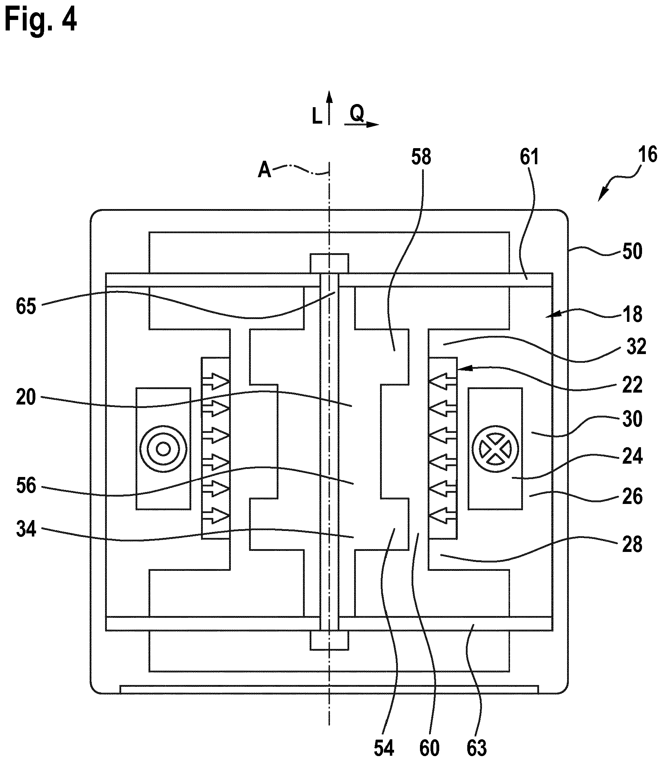

In der Figur 4 ist eine weitere Ausgestaltung des Linearaktors 16 schematisch dargestellt. Der Linearaktor 16 ist im Wesentlichen baugleich zu dem zuvor beschriebenen Linearaktoren 16, wie sie mit Bezug zu den Figur 2 bzw. 3 erläutert wurden. Es gelten deshalb die analogen Erläuterungen, Merkmale und/oder Vorteile. Der Linearaktor 16 aus der Figur 4 unterscheidet sich jedoch in der Ausgestaltung des Leitelements 26 und der zugehörigen Anordnung der Permanentmagneten 22a, 22b und der Spule 24. Um die Unterschiede und die zugehörigen Effekte zu erläutern, wird wie zuvor auch darauf verwiesen, dass der Linearaktor 16 symmetrisch zu der Achse A aufgebaut ist. Deshalb wird im Folgenden der Aufbau der rechten Hälfte des Linearaktors 16 erläutert, wobei analoge Merkmale, Vorteile und Effekte für den übrigen Linearaktor 16 gelten.

Wie zu der Figur 3 ist das Leitelement 26 des Linearaktors 16 aus Figur 4 C-förmig ausgebildet. In die entsprechende Öffnung werden jedoch ein Permanentmagnet 22 und zumindest ein Teil einer Spule 24 eingebracht, wobei der Permanentmagnet 22 und die Spule 24 in Querrichtung Q hintereinander angeordnet sind. In Querrichtung Q betrachtet sind der Permanentmagnet 22 ankerseitig und die Spule 24 längsabschnittseitig angeordnet. Somit übergreift das Leitelement 26 sowohl den Permanentmagneten 22 als auch die Spule 24. In Längsrichtung L erstreckt sich der Permanentmagnet 22 über die gesamte Längserstreckung der Spule 22 und vorzugsweise darüber hinaus. Somit grenzt der Permanentmagnet 22 sowohl an dem unteren Kragen 28 als auch an dem oberen Kragen 32 an. Erfolgt nun eine Bestromung der Spule 26, entsteht ein Spulenmagnetfeld mit entsprechend ringförmigen Magnetfeldlinien, die von dem Leitelement 26 und dem vom Anker 20 gebildeten Joch gebündelt werden. Aufgrund der angrenzenden Anordnung des Permanentmagneten 22 an beiden Kragen 28, 32 wird das Magnetfeld in dem unteren Kragen 28 konstruktiv und in dem oberen Kragen 32 destruktiv überlagern, oder umgekehrt. Der Anker 20 erfährt deshalb eine Zugkraft in Längsrichtung L.

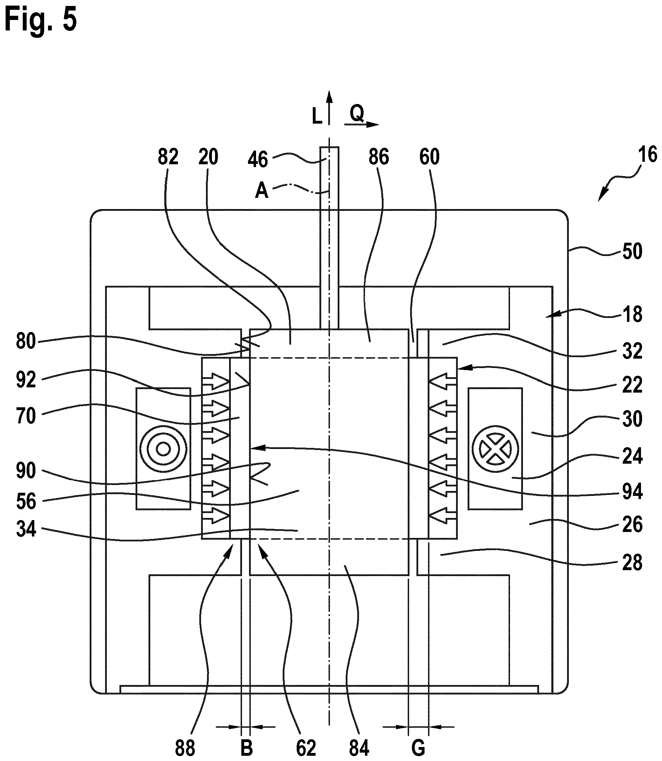

In der Figur 5 ist eine weitere Ausgestaltung des Linearaktors 16 nach einem Beispiel, das nicht in die Reichweite der Ansprüche fällt, schematisch dargestellt.

Der Linearaktor 16 ist im Wesentlichen baugleich zu dem zuvor beschriebenen Linearaktoren 16, wie sie mit Bezug zu den Figur 2 bis 4 erläutert wurden. Es gelten deshalb die analogen Erläuterungen, Merkmale und/oder Vorteile. Der Linearaktor 16 aus der Figur 5 unterscheidet sich jedoch in der Ausgestaltung der Lagerung des Ankers 20. Um zu gewährleisten, dass der Anker 20 die gewünschte Bewegung ausschließlich in Längsrichtung L ausführt, wurde zuvor exemplarisch an Ausführungsbeispielen erläutert, den Anker 20 an seiner Oberseite durch eine obere Führungsfeder 61 und an seiner Unterseite durch eine untere Führungsfeder 63 an dem Stator 18 zu befestigen. Die beiden Führungsfedern 61, 63 verhindern, dass der Anker 20 eine Bewegung in Querrichtung Q ausführen kann. Dazu sind die Führungsfedern 61, 63 oftmals mit einer hohen Steifigkeit auszugestalten. Diese hohe Steifigkeit kann jedoch bei einer Bewegung des Ankers in Längsrichtung den Nachteil aufweisen, dass der Anker 20 die Führungsfedern 61, 63 in Längsrichtung L verbiegen muss, so dass entsprechende Reaktionskräfte auf den Anker 20 wirken. Diese bei einer Bewegung des Ankers 20 auftretenden Kräfte verursachen eine Verlustleistung, die nicht zur Auslenkung, beispielsweise der Steuermembran 12, dient.

Um die genannte Verlustleistung zu vermeiden oder zumindest deutlich zu verkleinern und zugleich die Bewegungsrichtung des Ankers 20 auf eine Bewegungsrichtung in Längsrichtung L zu beschränken, kann der Anker 20 mittels einer Gleitlagerung 62 gelagert sein. Die Gleitlagerung 62 weist dazu einen Freiheitsgrad in Längsrichtung L auf. Sie kann deshalb Kräfte in Querrichtung Q des Aktors 16 übertragen. Durch die bevorzugte mechanische Verbindung des Ankers 20 zu der Steuermembran 12 kann eine Führungsgenauigkeit des Ankers in Längsrichtung L weiter verbessert werden, insbesondere wenn die Steuermembran 12 zur Aufnahme von Kräften in Querrichtung Q ausgestaltet ist. Die Gleitlagerung 62 gewährleistet, dass der Anker 20 auch bei einer Auslenkung in Längsrichtung L einen radial außenseitigen Abstand, insbesondere gekennzeichnet durch den Luftspalt 60, zu dem Stator 18 aufweist.

Die Gleitlagerung 62 weist besonders bevorzugt einen sehr kleinen Reibungskoeffizienten auf, so dass eine Verlustleistung, die bei einer Bewegung des Ankers 20 in Längsrichtung L durch die Reibung entsteht, vernachlässigbar klein ist. Unter dieser Annahme sind für den Aktor 16 keine zusätzlichen Leistungsreserven konstruktiv zu berücksichtigen, die sonst bei bekannten Aktoren notwendig wären, um möglichst große Auslenkung in Längsrichtung L auszuführen. Deshalb kann der Aktor 16 insgesamt kompakter und kleiner ausgebildet sein, was zudem eine Gewichtsreduzierung des Aktors 16 beziehungsweise des Hydrolagers 2 bietet.

Wie aus der Fig. 5 zu entnehmen ist, ist das Leitelement 26 des Linearaktors 16 im Querschnitt weiterhin C-förmig ausgebildet. In die entsprechende Öffnung, die auch als Aufnahmebereich bezeichnet wird, werden ein Permanentmagnet 22 und eine Spule 24 eingebracht, wobei der Permanentmagnet 22 und die Spule 24 in Querrichtung Q hintereinander angeordnet sind. In Querrichtung Q betrachtet sind der Permanentmagnet 22 ankerseitig und die Spule 24 längsabschnittseitig angeordnet. Deshalb übergreift das Leitelement 26 sowohl den Permanentmagneten 22 als auch die Spule 24. In Längsrichtung L erstreckt sich der Permanentmagnet 22 über die gesamte Längserstreckung der Spule 22 und vorzugsweise darüber hinaus. Mit anderen Worten grenzt der Permanentmagnet 22 sowohl an dem unteren Kragen 28 als auch an dem oberen Kragen 32 an. Der untere Kragen 28 bildet mit der zugehörigen, dem Anker 20 zugewandten Seite eine Statorpolfläche 82, insbesondere eine untere Statorpolfläche, aus. Entsprechendes gilt für den oberen Kragen 32, der mit der zugehörigen, dem Anker 20 zugewandten Seite eine weitere Statorpolfläche 82, insbesondere eine obere Statorpolfläche, ausbildet. Erfolgt nun eine Bestromung der Spule 26, entsteht ein Spulenmagnetfeld mit entsprechend ringförmigen Magnetfeldlinien, die von dem Leitelement 26 und dem vom Anker 20 gebildeten Joch 34 gebündelt werden. Aufgrund der an beiden Kragen 28, 32 angrenzenden Anordnung des Permanentmagneten 22 wird das Magnetfeld in dem unteren Kragen 28 konstruktiv und in dem oberen Kragen 32 destruktiv überlagert, oder umgekehrt. Der Anker 20 erfährt deshalb eine Zugkraft in Längsrichtung L.

Der Anker 20 aus oder mit ferromagnetischen Material bildet, wie zuvor erwähnt, ein Joch 34 für das Leitelement 26. Hierzu bedarf der Anker 20 weder eines Permanentmagneten noch einer Spule. Der Anker 20 ist deshalb frei von Permanentmagneten und/oder Spulen. In der Praxis hat es sich als zweckmäßig erwiesen, wenn sich das vom Anker 20 gebildete Joch 34 in Längsrichtung L von einem unteren Abschnitt 84 über einen Mittenabschnitt 56 zu einem oberen Abschnitt 86 erstreckt. In einer Ruheposition des Ankers 20 ist der obere Abschnitt 84 gegenüberliegend zu dem oberen Kragen 32 und der untere Abschnitt 86 gegenüberliegend zu dem unteren Kragen 28 ausgerichtet. Mit anderen Worten sind der obere Abschnitt 84 und der obere Kragen 32 in einer gemeinsamen, oberen Ebene und der untere Abschnitt 86 und der untere Kragen 28 in einer gemeinsamen unteren Ebene angeordnet. Der untere Abschnitt 84 des Ankers 20 bildet mit der zugehörigen, dem Stator 18 zugewandten Seite eine Ankerpolfläche 80, insbesondere eine untere Ankerpolfläche, aus. Entsprechendes gilt für den oberen Abschnitt 86, der mit der zugehörigen, dem Stator 18 zugewandten Seite eine weitere Ankerpolfläche 80, insbesondere eine obere Ankerpolfläche, ausbildet. Der untere Ankerabschnitt 84, der obere Ankerabschnitt 86 sowie die Kragen 28, 32 bestimmen somit einen Luftspalt 60, der sich jeweils im Bereich zwischen einer der Ankerpolflächen 80 und einer dazu gegenüber angeordneten Statorpolfläche 82 in Querrichtung Q ausbildet. Dabei weist der Luftspalt 60 in Querrichtung Q eine Spaltbreite B auf.

Aus der Figur 5 ist zu entnehmen, dass das Gleitelement 70 in Längsrichtung L zwischen dem unteren Kragen 28 und dem oberen Kragen 32 in eine Vertiefung 88 des Stators 18 einfasst. Das Gleitelement 70 ist also in Längsrichtung L des Linearaktors 16 zwischen dem oberen Kragen 32 und dem unteren Kragen 28 angeordnet. Damit überdeckt das Gleitelement 70 nicht die Statorpolflächen 82 des Stators 18. Somit können die Statorpolflächen 82 und die Ankerpolflächen 80 in einer Ruheposition des Linearaktors 16 paarweise gegenüberliegend zueinander angeordnet sein. Wie zuvor erläutert, werden die Ankerpolflächen 80 an einer jeweiligen, dem Stator 18 zugewandten Seite des unteren Ankerabschnitts 84 bzw. des oberen Ankerabschnitts 86 gebildet. Zwischen dem unteren Ankerabschnitt 84 und dem oberen Ankerabschnitt 86 ist der Mittenabschnitt 56 des Ankers 20. Die dem Stator 18 zugewandte Seite des Mittenabschnitts 56 des Ankers 20 bildet dabei eine Lagerfläche 90 der Gleitlagerung 62. Der Anker 20 liegt mit der Lagerfläche 90 an dem Gleitelement 70 unmittelbar an. Das Gleitelement 70 bildet deshalb mit der dem Anker 20 zugewandten Seite eine Gegenlagerfläche 92 der Gleitlagerung 62.

Um zu verhindern, dass die Ankerpolflächen 80 auf die Statorpolflächen 82 treffen und dabei eine unerwünschte mechanische Reibung verursachen, ragt das Gleitelement 70 in Querrichtung Q über die von den Kragen 28, 32 gebildeten Statorpolflächen 82 hinaus. Die Höhe in Querrichtung Q, mit der das Gleitelement 70 über die Statorpolflächen 82 hinaus ragt, bestimmt zugleich die Spaltbreite B des Luftspalt 60. Wie aus der Figur 5 weiter zu entnehmen ist, fasst jedoch weiterhin ein Teil des Gleitelements 70 in die Vertiefung 88 ein, so dass die Spaltbreite B kleiner als die Gleitelementbreite G ist. Dies hat den weiteren Vorteil, dass das Gleitelement 70 eine ausreichend große Gleitelementbreite G aufweisen kann, die für eine ausreichend hohe strukturelle Stabilität des Gleitelements 70 sorgt. Trotz der höheren Gleitelementbreite G kann die Luftspaltbreite B besonders klein gehalten werden, was den magnetischen Widerstand am Luftspalt 60 reduziert. Die Anordnung des Gleitelements 70 zwischen den Kragen 28, 32 des Stators 18 mit einer teilweisen Einfassung in die Vertiefung 88 des Stators 18 ermöglicht also eine vorteilhafte Lagerung des Ankers 20 mit einer gleichzeitigen geringen Ausgestaltung des magnetischen Widerstands am Luftspalt 60.

Darüber hinaus ist der Figur 5 zu entnehmen, dass der untere Ankerabschnitt 84, der Mittenabschnitt 56 des Ankers 20 und der obere Ankerabschnitt 86 ununterbrochen ausgebildet sind. Dies ermöglicht eine besonders einfache Herstellung des Ankers 20. Darüber hinaus kann die Lagerfläche 90 der Gleitlagerung 62 und die für das Joch 34 vorgesehenen Ankerpolflächen 80 an einer gemeinsamen, ununterbrochenen Ankerseite 94 ausgebildet sein. Mit dieser Ausgestaltung kann ein besonders kompakter Aufbau des Linearaktors 16 gewährleistet werden. Denn bei einem Auslenken des Ankers 20 in Längsrichtung L kann der Anker 20 problemlos mit dem oberen Ankerabschnitt 86 oder dem unteren Ankerabschnitt 84 über die Gegenlagerfläche 92 gleiten. Dies gilt insbesondere dann, wenn die Ankerpolflächen 80 und die Lagerfläche 90 fluchtend zueinander ausgerichtet sind. Tritt nun eine entsprechende Auslenkung des Ankers 20 auf, verschiebt sich die vom Anker 20 gebildete Lagerfläche 90 bis in den oberen Ankerabschnitt 86 oder den unteren Ankerabschnitt 84. Entsprechendes gilt für die Ankerpolflächen 80, die nunmehr teilweise von dem Mittenabschnitt 56 des Ankers 20 gebildet sein können. Mit anderen Worten können die unterschiedlichen Abschnitte 28, 84, 86 des Ankers 20 Doppelfunktionen aufweisen und zugleich eine widerstandsgeringe Auslenkung des Ankers 20 ermöglichen.

### Bezugszeichenliste

### (Teil der Beschreibung)

- A: Achse
- L: Längsrichtung
- Q: Querrichtung
- B: Spaltbreite
- G: Gleitelementbreite
- 2: Hydrolager
- 4: Arbeitskammer
- 6: Ausgleichskammer
- 8: Trennwand
- 10: Drosselkanal
- 12: Steuermembran
- 14: Arbeitskammervolumen
- 16: Linearaktor
- 18: Stator
- 20: Anker
- 22: Permanentmagnet
- 22a: unterer Permanentmagnet
- 22b: oberer Permanentmagnet
- 24: Spule
- 26: Leitelement
- 28: unterer Kragen
- 30: Längsabschnitt
- 32: oberer Kragen
- 34: Joch
- 36: Tragfeder
- 38: Abdeckung
- 40: Basisgehäuse
- 46: Stößel
- 48: Trennkörper
- 50: Statorgehäuse
- 54: unterer Steg
- 56: Mittenabschnitt
- 58: oberer Steg
- 60: Luftspalt
- 61: obere Führungsfeder
- 62: Gleitlagerung
- 63: untere Führungsfeder
- 65: Halterung
- 70: Gleitelement
- 80: Ankerpolfläche
- 82: Statorpolfläche
- 84: Unterer Abschnitt
- 86: Oberer Abschnitt
- 88: Vertiefung
- 90: Lagerfläche
- 92: Gegenlagerfläche
- 94: Ankerseite

## Patentansprüche

1. Elektromagnetischer Linearaktor (16) mit
- einem Stator (18) und
- einem zu dem Stator (18) beweglichen Anker (20),
- wobei der Stator (18) mindestens einen Permanentmagneten (22) und mindestens eine Spule (24) aufweist,
- wobei der Stator (18) ein Leitelement (26) aus ferromagnetischem Material aufweist,
- wobei das Leitelement (26) den mindestens einen Permanentmagneten (22) und/oder die mindestens eine Spule (26) ,in der Längsrichtung des Linearaktors (16), übergreift und
- wobei der Anker (18) in Längsrichtung L des Linearaktors (16) ein Joch (34) aus ferromagnetischem Material für das Leitelement (26) ausbildet,
- wobei der Permanentmagnet (22) eine Magnetfeldausrichtung in Querrichtung Q des Linearaktors (16) aufweist,
- wobei sich die Begriffe "ober(en)" und "unter(en)" auf Lage entlang der Längsrichtung L des Linearaktors beziehen,
- wobei das Leitelement (26) einen sich in Längsrichtung L des Linearaktors (16) erstreckenden Längsabschnitt (30), einen sich in Querrichtung Q des Linearaktors (16) erstreckenden, unteren Kragen (28) und einen sich in Querrichtung Q des Linearaktors (16) erstreckenden, oberen Kragen (32) aufweist, wobei der untere Kragen (28) von den oberen Kragen (32) in Längsrichtung L beabstandet ist,
- wobei jeder der Kragen (28, 32) den Längsabschnitt (30) in gleicher Querrichtung Q überragt, der mindestens eine Permanentmagnet (22) und/oder die mindestens eine Spule (24) zwischen den Kragen (28, 32), in der Längsrichtung L des Linearaktors, angeordnet ist bzw. sind,
- wobei sich das Joch (34) in Längsrichtung L von einem unteren Steg (54) über einen Mittenabschnitt (56) zu einem oberen Steg (58) erstreckt, wobei jeder der Stege (54, 58) den Mittenabschnitt (56) in Querrichtung Q überragt,
- wobei, in einer Ruheposition des Ankers 20, jeder obere Steg (58) und jeder obere Kragen (32) in einer gemeinsamen , in der Querrichtung (Q) des Linearaktors, oberen Ebene und/oder jeder untere Steg (54) und jeder untere Kragen (28) in einer gemeinsamen, in der Querrichtung (Q) des Linearaktors, unteren Ebene angeordnet sind, und
- wobei eine Statorpolfläche (82) des Stators (18) und eine zu der Statorpolfläche (82) gegenüber angeordnete Ankerpolfläche (80) des Ankers (20) in Querrichtung Q des Linearaktors (16) durch einen Spalt (60) voneinander beabstandet sind,
wobei
- der Linearaktor (16) ausgebildet ist, eine Bewegung des Ankers (20) aufgrund einer konstruktiven Überlagerung eines von der mindestens einen Spule (24) verursachten Spulenmagnetfelds und eines Permanentmagnetfelds des mindestens einen Permanentmagneten (22) in dem oberen Kragen (32) des Leitelements (26) und einer destruktiven Überlagerung des Spulenmagnetfelds und des Permanentmagnetfelds in dem untere Kragen (28) des Leitelements (26) zu erzeugen.

2. Linearaktor (16) nach dem vorhergehenden Anspruch, **dadurch gekennzeichnet, dass** der Anker (20) frei von Permanentmagneten (22) und Spulen (24) ist.

3. Linearaktor (16) nach einem der vorhergehenden Ansprüche, **dadurch gekennzeichnet, dass** der mindestens eine Permanentmagnet (22) und die mindestens eine Spule (24) in Längsrichtung L hintereinander angeordnet sind.

4. Linearaktor (16) nach einem der vorhergehenden Ansprüche, **dadurch gekennzeichnet, dass** der Permanentmagnet (22) oder mindestens einer der Permanentmagneten (22) in Querrichtung Q hinter oder vor der mindestens einen Spule (24) angeordnet ist.

5. Linearaktor (16) nach einem der vorhergehenden Ansprüche, **dadurch gekennzeichnet, dass** der Anker (20) mittels einer Gleitlagerung (62) gelagert ist.

6. Linearaktor (16) nach Anspruch 5, **dadurch gekennzeichnet, dass** der Anker (20) an einer zugehörigen, dem Stator (18) zugewandten Seite eine Lagerfläche (90) der Gleitlagerung (62) bildet, und an einer dem Anker (20) zugewandten Statorseite ein Gleitelement (70) der Gleitlagerung (62) befestigt ist, das mit einer zugehörigen, dem Anker (20) zugewandten Seite eine Gegenlagerfläche (92) der Gleitlagerung (62) bildet.

7. Linearaktor (16) nach einem der vorhergehenden Ansprüche 5 oder 6, **dadurch gekennzeichnet, dass** das Gleitelement (70) zwischen dem unteren Kragen (28) und dem oberen Kragen (32) in den Stator (18) einfasst.

8. Linearaktor (16) nach einem der vorhergehenden Ansprüche 6 oder 7, **dadurch gekennzeichnet, dass** eine Spaltbreite B des Spalts (60) kleiner als eine Gleitelementbreite G des Gleitelements (70) ist.

9. Hydrolager (2) mit
- einer Tragfeder (36),
- einer Arbeitskammer (4), die mit einer Hydraulikflüssigkeit gefüllt ist,
- einer Ausgleichskammer (6),
- einer Trennwand (8), die zwischen der Arbeitskammer (4) und der Ausgleichskammer (6) angeordnet ist,
- einem zwischen der Arbeitskammer (4) und der Ausgleichskammer (6) ausgebildeten Drosselkanal (10) zum Austausch von Hydraulikflüssigkeit, und
- einer der Trennwand (8) zugeordneten Steuermembran (12), die zur Veränderung eines Arbeitskammervolumens (14) der Arbeitskammer (4) ausgebildet ist,
**dadurch gekennzeichnet, dass**
- das Hydrolager (2) einem elektromagnetischen Linearaktor (16) nach einem der vorhergehenden Ansprüche aufweist,
- wobei der Anker (20) mit der Steuermembran (12) mechanisch verbunden ist.

10. Kraftfahrzeug umfassend
- einen Fahrzeugrahmen,
- einen Motor und
- ein Motorlager, das eine lagernde Verbindung zwischen dem Motor und dem Fahrzeugrahmen herstellt,
**dadurch gekennzeichnet, dass**
- das Motorlager durch ein Hydrolager (2) nach Anspruch 9 ausgebildet ist.

## Claims

1. Electromagnetic linear actuator (16), having
- a stator (18) and
- an armature (20) which is movable relative to the stator (18),
- wherein the stator (18) has at least one permanent magnet (22) and at least one coil (24),
- wherein the stator (18) has a conductive element (26) composed of ferromagnetic material,
- wherein the conductive element (26) engages over the at least one permanent magnet (22) and/or the at least one coil (26) in the longitudinal direction L of the linear actuator (16), and
- wherein the armature (18) forms, in the longitudinal direction L of the linear actuator (16), a yoke (34) composed of ferromagnetic material for the conductive element (26),
- wherein the permanent magnet (22) has a magnetic field orientation in a transverse direction Q of the linear actuator (16),
- wherein the expressions "upper" and "lower" relate to a position along the longitudinal direction L of the linear actuator,
- wherein the conductive element (26) has a longitudinal section (30) extending in the longitudinal direction L of the linear actuator (16), a lower collar (28) extending in a transverse direction Q of the linear actuator (16), and an upper collar (32) extending in the transverse direction Q of the linear actuator (16), wherein the lower collar (28) is spaced apart from the upper collar (32) in the longitudinal direction L,
- wherein each of the collars (28, 32) projects beyond the longitudinal section (30) in the same transverse direction Q, the at least one permanent magnet (22) and/or the at least one coil (24) are/is arranged between the collars (28, 32) in the longitudinal direction L of the linear actuator,
- wherein the yoke (34) extends in the longitudinal direction L from a lower web (54) via a middle section (56) to an upper web (58), wherein each of the webs (54, 58) projects beyond the middle section (56) in the transverse direction Q,
- wherein, in a rest position of the armature (20), each upper web (58) and each upper collar (32) is arranged in a common upper plane as viewed in the transverse direction (Q) of the linear actuator, and/or each lower web (54) and each lower collar (28) is arranged in a common lower plane as viewed in the transverse direction (Q) of the linear actuator, and
- wherein a stator pole surface (82) of the stator (18) and an armature pole surface (80), arranged opposite the stator pole surface (82), of the armature (20) are spaced apart from one another in the transverse direction Q of the linear actuator (16) by a gap (60),
wherein
- the linear actuator (16) is configured to generate a movement of the armature (20) on the basis of a constructive superposition of a coil magnetic field caused by the at least one coil (24) and of a permanent magnetic field of the at least one permanent magnet (22) in the upper collar (32) of the conductive element (26) and a destructive superposition of the coil magnetic field and of the permanent magnetic field in the lower collar (28) of the conductive element (26).

2. Linear actuator (16) according to the preceding claim, **characterized in that** the armature (20) is free from permanent magnets (22) and coils (24).

3. Linear actuator (16) according to either one of the preceding claims, **characterized in that** the at least one permanent magnet (22) and the at least one coil (24) are arranged one behind the other in the longitudinal direction L.

4. Linear actuator (16) according to any one of the preceding claims, **characterized in that** the permanent magnet (22) or at least one of the permanent magnets (22) is arranged behind or in front of the at least one coil (24) in the transverse direction Q.

5. Linear actuator (16) according to any one of the preceding claims, **characterized in that** the armature (20) is mounted by way of a slide bearing arrangement (62).

6. Linear actuator (16) according to Claim 5, **characterized in that** the armature (20) forms, on an associated side facing toward the stator (18), a bearing surface (90) of the slide bearing arrangement (62), and a slide element (70) of the slide bearing arrangement (62) is fastened to a stator side facing toward the armature (20), which slide element, by way of an associated side facing toward the armature (20), forms a counterpart bearing surface (92) of the slide bearing arrangement (62).

7. Linear actuator (16) according to either one of the preceding Claims 5 and 6, **characterized in that** the slide element (70) is enclosed in the stator (18) between the lower collar (28) and the upper collar (32).

8. Linear actuator (16) according to either one of the preceding Claims 6 and 7, **characterized in that** a gap width B of the gap (60) is smaller than a slide element width G of the slide element (70).

9. Hydraulic mount (2), having
- a load-bearing spring (36),
- a working chamber (4) which is filled with a hydraulic fluid,
- an equalization chamber (6),
- a partition (8) which is arranged between the working chamber (4) and the equalization chamber (6),
- a throttle duct (10) which is formed between the working chamber (4) and the equalization chamber (6) and which serves for the exchange of hydraulic fluid, and
- a control diaphragm (12) which is assigned to the partition (8) and which is designed for the variation of a working chamber volume (14) of the working chamber (4),
**characterized in that**
- the hydraulic mount (2) has an electromagnetic linear actuator (16) according to any one of the preceding claims,
- wherein the armature (20) is mechanically connected to the control diaphragm (12).

10. Motor vehicle, comprising
- a vehicle frame,
- an engine, and
- an engine mount which produces a connection, with mounting action, between the engine and the vehicle frame,
**characterized in that**
- the engine mount is formed by a hydraulic mount (2) according to Claim 9.

## Revendications

1. Actionneur linéaire électromagnétique (16), comprenant
- un stator (18), et
- une armature (20) mobile par rapport au stator (18),
- le stator (18) présentant au moins un aimant permanent (22) et au moins une bobine (24),
- le stator (18) présentant un élément conducteur (26) en matériau ferromagnétique,
- l'élément conducteur (26) chevauchant ledit au moins un aimant permanent (22) et/ou ladite au moins une bobine (26) dans la direction longitudinale L de l'actionneur linéaire (16), et
- l'armature (18) réalisant dans la direction longitudinale L de l'actionneur linéaire (16) une culasse (34) en matériau ferromagnétique pour l'élément conducteur (26),
- l'aimant permanent (22) présentant une orientation de champ magnétique dans la direction transversale Q de l'actionneur linéaire (16),
- les termes « supérieur » et « inférieur » faisant référence à la position le long de la direction longitudinale L de l'actionneur linéaire,
- l'élément conducteur (26) présentant une section longitudinale (30) s'étendant dans la direction longitudinale L de l'actionneur linéaire (16), une collerette inférieure (28) s'étendant dans la direction transversale Q de l'actionneur linéaire (16) et une collerette supérieure (32) s'étendant dans la direction transversale Q de l'actionneur linéaire (16), la collerette inférieure (28) étant espacée par rapport à la collerette supérieure (32) dans la direction longitudinale L,
- chacune des collerettes (28, 32) dépassant de la section longitudinale (30) dans la même direction transversale Q, ledit au moins un aimant permanent (22) et/ou ladite au moins une bobine (24) étant disposé(es) entre les collerettes (28, 32) dans la direction longitudinale L de l'actionneur linéaire,
- la culasse (34) s'étendant dans la direction longitudinale L d'une entretoise inférieure (54) à une entretoise supérieure (58) en passant par une section intermédiaire (56), chacune des entretoises (54, 58) dépassant de la section intermédiaire (56) dans la direction transversale Q,
- dans lequel, dans une position de repos de l'armature (20), chaque entretoise supérieure (58) et chaque collerette supérieure (32) sont disposées dans un plan supérieur commun dans la direction transversale (Q) de l'actionneur linéaire, et/ou chaque entretoise inférieure (54) et chaque collerette inférieure (28) sont disposées dans un plan inférieur commun dans la direction transversale (Q) de l'actionneur linéaire, et
- une face polaire de stator (82) du stator (18) et une face polaire d'armature (80) de l'armature (20), disposée à l'opposé de la face polaire de stator (82), sont espacées l'une de l'autre par un entrefer (60) dans la direction transversale Q de l'actionneur linéaire (16),
dans lequel
- l'actionneur linéaire (16) est réalisé pour produire un mouvement de l'armature (20) en raison d'une superposition constructive d'un champ magnétique de bobine provoqué par ladite au moins une bobine (24) et d'un champ magnétique permanent du au moins un aimant permanent (22) dans la collerette supérieure (32) de l'élément conducteur (26) et d'une superposition destructive du champ magnétique de bobine et du champ magnétique permanent dans la collerette inférieure (28) de l'élément conducteur (26).

2. Actionneur linéaire (16) selon la revendication précédente, **caractérisé en ce que** l'armature (20) est exempte d'aimants permanents (22) et de bobines (24).

3. Actionneur linéaire (16) selon l'une quelconque des revendications précédentes, **caractérisé en ce que** ledit au moins un aimant permanent (22) et ladite au moins une bobine (24) sont disposés l'un après l'autre dans la direction longitudinale L.

4. Actionneur linéaire (16) selon l'une quelconque des revendications précédentes, **caractérisé en ce que** l'aimant permanent (22) ou au moins l'un des aimants permanents (22) est disposé dans la direction transversale Q derrière ou devant ladite au moins une bobine (24).

5. Actionneur linéaire (16) selon l'une quelconque des revendications précédentes, **caractérisé en ce que** l'armature (20) est montée au moyen d'un palier lisse (62).

6. Actionneur linéaire (16) selon la revendication 5, **caractérisé en ce que** l'armature (20) forme sur un côté associé, tourné vers le stator (18), une surface d'appui (90) du palier lisse (62), et sur un côté de stator, tourné vers l'armature (20), un élément de glissement (70) du palier lisse (62) qui forme avec un côté associé, tourné vers l'armature (20), une surface de palier-support (92) du palier lisse (62).

7. Actionneur linéaire (16) selon l'une quelconque des revendications précédentes 5 ou 6, **caractérisé en ce que** l'élément de glissement (70) vient en prise dans le stator (18) entre la collerette inférieure (28) et la collerette supérieure (32).

8. Actionneur linéaire (16) selon l'une quelconque des revendications précédentes 6 ou 7, **caractérisé en ce qu'**une largeur d'entrefer B de l'entrefer (60) est inférieure à une largeur d'élément de glissement G de l'élément de glissement (70).

9. Palier hydraulique (2), comprenant
- un ressort de support (36),
- une chambre de travail (4) qui est remplie d'un liquide hydraulique,
- une chambre d'équilibrage (6),
- une cloison (8) qui est disposée entre la chambre de travail (4) et la chambre d'équilibrage (6),
- un canal d'étranglement (10) réalisé entre la chambre de travail (4) et la chambre d'équilibrage (6) pour l'échange de liquide hydraulique, et
- une membrane de commande (12) associée à la cloison (8) et qui est réalisée pour modifier un volume de chambre de travail (14) de la chambre de travail (4),
**caractérisé en ce que**
- le palier hydraulique (2) présente un actionneur linéaire électromagnétique (16) selon l'une quelconque des revendications précédentes,
- l'armature (20) étant reliée mécaniquement à la membrane de commande (12).

10. Véhicule automobile, comprenant
- un châssis de véhicule,
- un moteur, et
- un palier de moteur qui établit une liaison de palier entre le moteur et le châssis de véhicule,
**caractérisé en ce que**
- le palier de moteur est réalisé par un palier hydraulique (2) selon la revendication 9.
